(19) Europäisches Patentamt
European Patent Office
Office européen des brevets

(11) Publication number: **0 489 417 A2**

# (12) EUROPEAN PATENT APPLICATION

(21) Application number: **91120829.6**

(22) Date of filing: **04.12.91**

(51) Int. Cl.5: **B01D 71/48**, B01D 71/50, B01D 71/46, B01D 53/22

(30) Priority: **06.12.90 US 623142**

(43) Date of publication of application: **10.06.92 Bulletin 92/24**

(84) Designated Contracting States: **BE DE FR GB IT NL**

(71) Applicant: **THE DOW CHEMICAL COMPANY**
**2030 Dow Center Abbott Road**
**Midland, MI 48640(US)**

(72) Inventor: **Parker, Theodore L.**
**2312 Benham Court**
**Walnut Creek, California 94596(US)**
Inventor: **Sanders, Edgar S.**
**3939 Highgate Way**
**Pittsburgh, California 94565(US)**
Inventor: **Mickols, William E.**
**1401 Winchester**
**Midland, Michigan 48640(US)**
Inventor: **Jordan, Susan M.**
**2867 Springdale Lane**
**San Ramon, California 94583(US)**
Inventor: **Jeanes, Thomas O.**
**2312 Robls Drive**
**Antioch, California 94509(US)**

(74) Representative: **Casalonga, Axel et al**
**BUREAU D.A. CASALONGA - JOSSE**
**Morassistrasse 8**
**W-8000 München 5(DE)**

## (54) A cross-linked semi-permeable gas separation membrane substantially derived from a reaction product of a thermoformable, thermosettable aromatic polycarbonate, polyestercarbonate, and/or polyester polymer and an epoxy resin.

(57) The invention relates to a cross-linked semi-permeable gas separation membrane having a thin discriminating layer substantially derived from a reaction product of an epoxy resin and a thermoformable, thermosettable aromatic polymer of polycarbonate, polyestercarbonate, polyester, or a combination thereof, and a process of separating gases using the membrane.

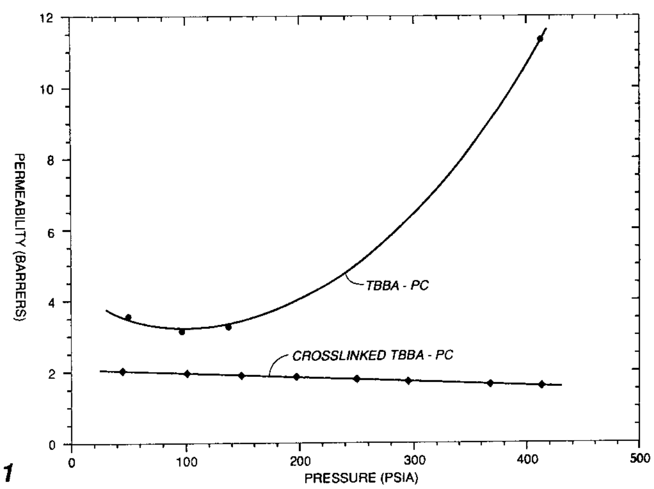


FIG._1

EP 0 489 417 A2

This invention relates to a cross-linked semi-permeable gas separation membrane substantially derived from a reaction product of a thermoformable, thermosettable aromatic polycarbonate, polyestercarbonate, and/or polyester polymer and an epoxy resin, and a process of separating gases using said membrane.

The use of membranes to separate gases is known in the art. Membranes have been used to recover or isolate a variety of gases, including hydrogen, helium, oxygen, nitrogen, carbon monoxide, carbon dioxide, water vapor, hydrogen sulfide, ammonia, and/or light hydrocarbons. Applications of particular interest include the separation of hydrogen or helium from gas mixtures such as mixtures containing nitrogen, carbon monoxide, carbon dioxide, water vapor, and/or light hydrocarbons. For example, the separation and recycle of hydrogen is often necessary in various hydrocracker, hydrotreater, and catalytic cracking processes used in the oil refinery industry. Other applications of interest include the separation of carbon dioxide from light hydrocarbons or other crude oil components as part of the tertiary oil recovery process. Additional applications include the recovery of an enriched oxygen stream from air for use in enhanced combustion or fermentation processes. Alternately, an enriched nitrogen stream may be obtained from air for use as an inert atmosphere over flammable fluids or for food storage. Membranes can be used to achieve such separations.

Such membrane separations are based on the relative permeability of two or more gaseous components through the membrane. To separate a gas mixture into two portions, one richer and one leaner in at least one gaseous component, the gas mixture is brought into contact with one side of a semi-permeable membrane through which at least one of the gaseous components selectively permeates. A gaseous component which selectively permeates through the membrane passes through the membrane more rapidly than at least one other gaseous component of the mixture. The gas mixture is thereby separated into a stream which is enriched in the selectively permeating gaseous component or components and a stream which is depleted in the selectively permeating gaseous component or components. A relatively non-permeating gaseous component passes more slowly through the membrane than at least one other gaseous component of the mixture. An appropriate membrane material is chosen so that some degree of separation of the gas mixture can be achieved.

Membranes for gas separation have been fabricated from a wide variety of polymeric materials, including cellulose esters, aromatic polyimides, polyaramides, polysulfones, polyethersulfones, polyesters, and polycarbonates. An ideal gas separation membrane is characterized by the ability to operate under high temperatures and/or pressures while possessing a high gas separation factor (selectivity) and high gas permeability. Gas separation membranes also are preferably fabricated from polymers which are easily processed, which are capable of operating at high temperatures and pressures, and which possess good solvent resistance.

The problem is finding membrane materials which possess all the desired characteristics. Polymers possessing high separation factors generally have low gas permeabilities, while those polymers possessing high gas permeabilities generally have low separation factors. In the past, a choice between a high gas separation factor and a high gas permeability has been unavoidably necessary. Furthermore, some of the polymeric membrane materials previously used for membranes suffer from the disadvantage of poor performance under high operating temperatures and pressures. However, those polymeric membrane materials capable of operating at high temperatures and pressures are typically difficult to fabricate into membranes. Solvent resistance is also generally obtainable only with polymeric materials which are difficult to fabricate into membranes.

A membrane capable of separating gas mixtures which possesses high selectivity, good gas permeability, ability to operate under conditions of high temperature and/or high pressure, good solvent resistance, and ease of fabrication is needed.

The invention is a cross-linked semi-permeable gas separation membrane comprising a thin discriminating layer substantially derived from a reaction product of an epoxy resin and a thermoformable, thermosettable aromatic polymer selected from the group consisting of polycarbonate, polyestercarbonate, polyester, and a combination thereof. In a preferred embodiment, the aromatic polymer corresponds to Formula I:

Formula I

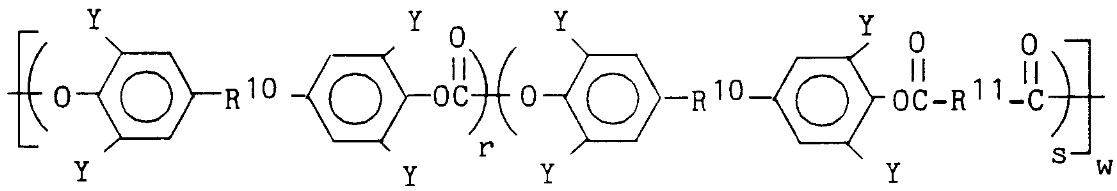

wherein

$R^{10}$ is independently in each occurrence selected from the group consisting of a direct bond, -CO-, $-CO_2-$, -S-, -SO-, $-SO_2-$, -SS-, -O-, a $C_{1-12}$ divalent hydrocarbon radical, an inertly substituted $C_{1-12}$ divalent hydrocarbon radical, and a $C_{1-12}$ divalent halocarbon radical;

$R^{11}$ is independently in each occurrence selected from the group consisting of a $C_{1-18}$ divalent hydrocarbon radical, an inertly substituted $C_{1-18}$ divalent hydrocarbon radical, and a $C_{1-18}$ divalent halocarbon radical;

Y is independently in each occurrence selected from the group consisting of hydrogen, a halogen, a $C_{1-6}$ alkyl, a $C_{1-4}$ haloalkyl, and a $C_{1-4}$ alkoxy;

r is a positive real number between 0 and 1 inclusive;

s is a positive real number between 0 and 1 inclusive; and

w is a positive real number of at least 2.

In another aspect, the invention is a process of separating gases comprising:

A. contacting one side of a cross-linked semi-permeable gas separation membrane with a feed gas mixture under pressure, wherein the membrane divides a separation chamber into a high pressure side into which the feed gas mixture is fed and a low pressure side;

B. maintaining a pressure differential across the membrane under conditions such that at least one gaseous component in the feed gas mixture selectively permeates through the membrane from the high pressure side to the low pressure side of the membrane;

C. removing from the low pressure side of the membrane permeated gas which is enriched in the selectively permeating gaseous component(s); and

D. removing from the high pressure side of the membrane non-permeated gas which is depleted in the selectively permeating gaseous component(s);

wherein said membrane comprises a thin discriminating layer substantially derived from a reaction product of an epoxy resin and a thermoformable, thermosettable aromatic polymer selected from the group consisting of polycarbonate, polyestercarbonate, polyester, and a combination thereof.

The membranes of this invention possess good gas permeability, high gas selectivity, adequate mechanical strength, good temperature resistance, good solvent resistance, and are readily fabricated.

Figure 1 illustrates the differences in pressure dependence on the permeabilities of uncross-linked and cross-linked membranes. Figure 2 illustrates the impact of a mixed gas feed and a pure gas feed on the permeability of a cross-linked membrane.

Definitions of terms employed herein are provided below.

1. Melt-blendable: Forms a solution or a homogeneous dispersion when melted and stirred.
2. Thermoplastic: A polymer that softens and flows when exposed to heat and/or pressure and hardens when cooled or the pressure is reduced.
3. Thermosettable: A polymer that solidifies, hardens, or "sets" irreversibly when exposed to heat and optionally pressure.
4. Aromatic Polyester: A polymer chain in which the repeating units comprise -R-O-CO- groups in which the R's comprise divalent aryl radicals. By "poly" is meant an average of at least two units per molecule.
5. Aromatic Polycarbonate: A polymer chain in which the repeating units comprise -R-O-CO-O- groups in which the R's comprise divalent aryl radicals By "poly" is meant an average of at least two units per molecule.
6. Aromatic Polyestercarbonate: A copolymer in which the repeating units comprise -R-O-CO- groups and -R-O-CO-O- groups in which the R's comprise divalent aryl radicals. By "poly" is meant an average of at least two units per molecule.
7. Epoxide, Epoxy or Polyepoxide: At least a difunctional oxirane compound or a mixture of compounds

having an average oxirane functionality of at least 1.5.

8. Active Hydrogens: Hydrogens reactive with oxirane or carbonate groups; present in functional groups such as hydroxyl, carboxyl, amino, and amido, for example.

9. Initiator/catalyst: An initiator is an agent used to promote a chemical reaction in which the agent is consumed in the reaction. A catalyst is an agent used to promote a chemical reaction in which the agent is not consumed in the reaction. As a matter of convenience, the terms initiator and catalyst are used interchangeably herein even though the compounds described may function, strictly speaking, as "initiators" or "catalysts" in various oxirane/ester or oxirane/carbonate reaction mixtures.

10. Secant Onset Temperature: The value on the temperature axis corresponding to the intersection of a straight line, drawn as a secant to the total heat flow versus temperature curve plotted by a duPont 1090 Differential Scanning Calorimeter, and the interpolated base line of the exothermic peak signal.

11. Melt-processed: Caused to assume a particular shape and/or undergo a change in rheology, often in concurrence with changes in molecular structures.

12. Deterioration: Undergoing, to an intolerable extent, property changes detrimental to the use contemplated for the final product.

13. Essentially Free Of: Including not more than incidental amounts of. Note: This does not exclude using epoxides having more than incidental amounts of active hydrogen functions, provided said functions are first converted to inactive or non-interfering derivative groups (in situ, in some cases) and/or the amount of carbonate charged is still sufficient to convert the desired proportion of oxiranes.

14. Inactive Or Non-Interfering: Not detrimentally effecting the rate of one or more desired reactions or the nature of the products of the same to an intolerable extent.

15. Compatible: Miscible without requiring the presence of a solvent. That is, if a mixture of the epoxide and the carbonate and/or ester is melted, or if a hot solution of the epoxide and carbonate and/or ester in a solvent is stripped to a final temperature at which the residue mixture is molten, the resulting melt is a homogeneous dispersion or solution.

16. Phosphine Iminium Compounds: Also known as bis (phosphoranylidene) ammonium salts.

17. Aromatic: Includes heteroaromatic.

The cross-linked semi-permeable gas separation membranes of this invention are substantially derived from a reaction product of an epoxy resin and a thermoformable, thermosettable aromatic polymer. The aromatic polymers suitable for use in the present invention include polyesters, polyestercarbonates, polycarbonates, and combinations, that is, mixtures or blends, thereof. The membranes of this invention are cross-linked, that is, the membranes are comprised of a polymer network which is substantially insoluble in common solvents.

Non-aromatic hydrocarbyl or hetrohydrocarbyl moieties may be included in or pendant from the polymer chains in any of the several preceding types of aromatic polycarbonate, polyestercarbonate, and/or polyester polymers.

Preferably, substantially all of the groups in such polymers are in the form of R-O-CO-R and R-O-CO-O-R groups in which the R's comprise aryl or arylene radicals. The polymers useful in this invention are preferably substantially derived from a substituted or unsubstituted bisphenol. Polycarbonates, polyestercarbonates, and polyesters substantially derived from substituted or unsubstituted bisphenol A are especially preferred. In such substituted bisphenolic polymers, the substituents may occur on the phenolic rings, on the bridging group, or a combination thereof. Such phenolic and bridging group substituents preferably include $C_{1-6}$ alkyl, $C_{1-4}$ haloalkyl, and $C_{1-4}$ alkoxy monovalent radicals and halogens such as chlorine, bromine, and fluorine.

The polycarbonate, polyestercarbonate, and/or polyester polymers useful in this invention preferably comprise a polymer backbone structure corresponding to Formula I:

Formula I

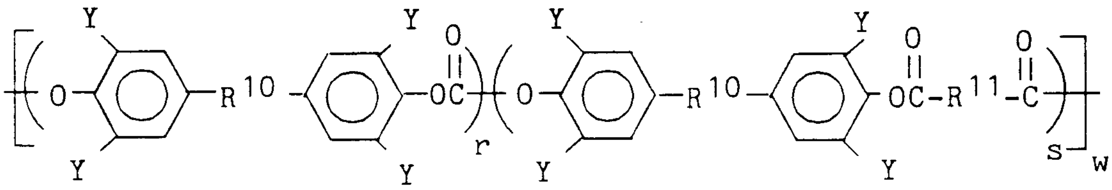

In Formula I, $R^{10}$ is independently in each occurrence preferably a direct bond, -CO-, $-CO_2-$, -S-, -SO-, $-SO_2-$, -SS-, -O-, a $C_{1-8}$ divalent hydrocarbon radical, an inertly substituted $C_{1-8}$ divalent hydrocarbon radical, or a $C_{1-8}$ divalent halocarbon radical. $R^{10}$ is independently in each occurrence more preferably a direct bond, a $C_{1-6}$ divalent hydrocarbon radical, an inertly substituted $C_{1-6}$ divalent hydrocarbon radical, or a $C_{1-6}$ divalent halocarbon radical. $R^{10}$ is even more preferably a $C_{1-3}$ divalent hydrocarbon radical, an inertly substituted $C_{1-3}$ divalent hydrocarbon radical, or a $C_{1-3}$ divalent halocarbon radical. Preferred divalent halocarbon radicals include divalent chloro-, bromo-, and fluorocarbon radicals. Inertly substituted as used herein refers to substituents which do not result in undesired reactions or properties in the membrane prepared therefrom. The divalent hydrocarbon radical may be aliphatic, alicyclic, or aromatic.

In Formula I, $R^{11}$ is independently in each occurrence preferably an unsubstituted or halo-substituted $C_{1-12}$ divalent aliphatic hydrocarbon radical, an unsubstituted or halo-substituted $C_{5-18}$ divalent cycloaliphatic hydrocarbon radical, or an unsubstituted or halo-substituted $C_{6-18}$ divalent aromatic hydrocarbon radical. More preferably, $R^{11}$ is independently in each occurrence described by Formulas II-V:

Formula II

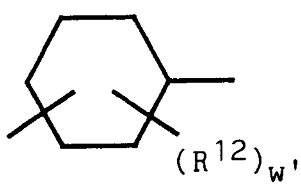

;

Formula III

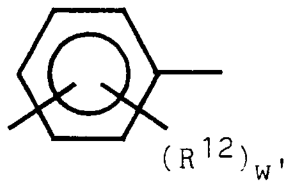

;

Formula IV

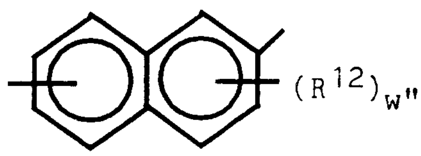

; and

Formula V

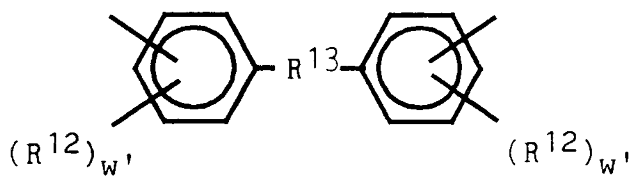

;

wherein

$R^{12}$ is independently in each occurrence hydrogen, a halogen, an unsubstituted or halo-substituted $C_{1-6}$ alkyl, or phenyl; w' is independently in each occurrence a positive integer from 0 to 4; w" is independently in each occurrence a positive integer from 0 to 6; and $R^{13}$ is independently in each occurrence an unsubstituted, inertly-substituted, or halo-substituted $C_{1-6}$ divalent hydrocarbon radical. Most preferably, $R^{11}$ is described by Formula VI:

Formula VI

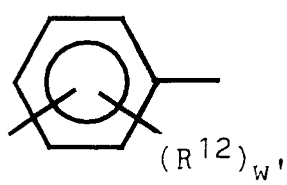

;

wherein $R^{12}$ and w' are as hereinbefore described.

In Formula I, Y is independently in each occurrence preferably hydrogen, a halogen, a $C_{1-4}$ alkyl, or a $C_{1-4}$ alkoxy. Y is independently in each occurrence more preferably hydrogen, chlorine, bromine, fluorine, methyl, ethyl, methoxy, or ethoxy. Y is independently in each occurrence even more preferably hydrogen, chlorine, bromine, fluorine, or methyl. Y is independently in each occurrence most preferably chlorine, bromine, or fluorine.

The ratio of ester to carbonate groups, that is, the value of s/r, in the polyestercarbonate polymers is preferably from 0.005 to 200, more preferably from 0.01 to 100, even more preferably from 0.10 to 90, most

preferably from 0.20 to 80.

w is preferably at least 4, more preferably at least 10, even more preferably at least 25; w is preferably less than 250, more preferably less than 200, even more preferably less than 150.

The polycarbonates, polyestercarbonates, and polyesters useful in this invention are synthesized by methods well known in the art. See U.S. Patents 2,465,319; 2,999,835; 3,028,364; 3,028,365; 3,030,331; 3,038,874; 3,047,539; 3,119,787; 3,153,008; 3,169,121; 3,207,814; 3,248,366; 3,317,464; 3,334,154; 3,409,704; 3,780,148; 3,824,213; 3,829,266; 3,912,687; 3,948,856; 4,137,128; 4,156,069; 4,194,038; 4,255,556; 4,310,652; 4,311,822; and 4,413,103; the relevant portions relating to polymer synthesis incorporated herein by reference for all legal purposes served thereby. See also Kirk-Othmer Encyclopedia of Chemical Technology, 3rd edition, vol. 18, John Wiley & Sons, New York, New York, 1982, pp. 479-494, and 531-593 and Encyclopedia of Polymer Science, vol. 10, John Wiley and Sons, New York, New York, 1969, pp. 714-725, the relevant portions relating to polymer synthesis incorporated herein by reference for all legal purposes served thereby.

The polymers useful in this invention preferably have a number-average molecular weight of at least 508, more preferably of at least 700, even more preferably of at least 1,000, most preferably of at least 2,000. The polymers useful in this invention preferably have a number-average molecular weight of less than 75,000, more preferably of less than 60,000. The polymers useful in this invention preferably have an inherent viscosity in methylene chloride of at least 0.05 dL/gram, more preferably of at least 0.14 dL/gram, even more preferably of at least 0.27 dL/gram; such polymers preferably have an inherent viscosity in methylene chloride of less than 1.35 dL/gram, more preferably of less than 1.15 dL/gram, even more preferably of less than 0.94 dL/gram.

Epoxides suitable for the practice of the present invention include polyepoxides in general. Such polyepoxides may be single molecular species containing two or more oxirane groups per molecule or may be species mixtures having an average of at least 1.5 oxiranes per molecule, provided the polyepoxide employed is essentially free of active hydrogens. Any or all of the oxirane-functional species constituting an epoxy resin employed may include such non-interfering or inert substituents as it is synthetically feasible to incorporate into those species. Epoxides of different molecular weights may be employed to vary the cross-link density in the cured reaction product.

Epoxides which include substantial contents of active hydrogen-containing functional groups are not, per se, suitable for use in the present invention but may be rendered suitable by converting such active hydrogen-containing functional groups to ester groups or to unreactive or non-interfering derivative groups. Thus, for example, secondary alcoholic hydroxyls may be transesterified by conventional procedures at moderate temperatures with monoaryl carbonates of lower alcohols, the latter being readily stripped off as produced in the reaction. Alternatively, the active hydrogen-containing groups may be reacted with an aromatic chloroformate, such as, for example, phenyl chloroformate. Either of the latter techniques may be used to convert the active hydrogen source groups to aromatic carbonate groups which can then participate in the subsequent formation of cross-links by the catalyzed/initiated oxirane/carbonate/ester interaction hereinafter described.

When the epoxide is of such high molecular weight that is not, as such, compatible with the carbonate and/or ester components, it may be possible to render it compatible, provided such epoxide includes a substantial number of active hydrogen functions, by converting the latter to -CO-OR or -O-CO-OR groups.

Examples of suitable epoxides for use in this invention include diolefin diepoxides, vinylcycloalkene dioxides, dicyclodiolefin dioxides, divinylbenzene dioxide, diallylbenzene dioxide, the dioxide of biscyclopentenyl ether, the dioxide of p,p'-divinyldiphenyl, the dioxides of divinyl diphenylsulfide and diphenylether, diglycidyl ether, the diglycidyl ethers of dihydroxy benzenes, and dinuclear diphenols, most notably bisphenols, the diglycidyl ethers of aliphatic diols and of glycol polyethers, and the diglycidyl esters of diacids.

Other representative epoxides suitable for use in this invention include hydantoin epoxides, for example, N,N'-diglycidyl hydantoins, 1-glycidyl-3-(2,3--diglycidyloxy-prop-1-yl)5,5-dimethylhydantoin, and 1,3-di-(1-glycidyl-5,5-dimethylhydantoin-1-yl)-2-glycidyl-oxypropane. Dihydrouracils, barbituric acids, and cyanuric and isocyanuric acids comprising 2 or 3 glycidyl groups are also suitable.

More exotic types of diepoxides, such as those containing silicon, phosphorous, or other hetero atoms in linear, branched, or cyclic segments of the molecule may also be suitable as the predominant component of an epoxy resin for use in the present invention, either as the sole diepoxide employed in the oxirane/ester and/or oxirane/carbonate reaction or in admixture with other epoxides.

The epoxides possessing structures corresponding to Formulas 1-6 are generally preferred for the practice of the present invention.

Formula 1

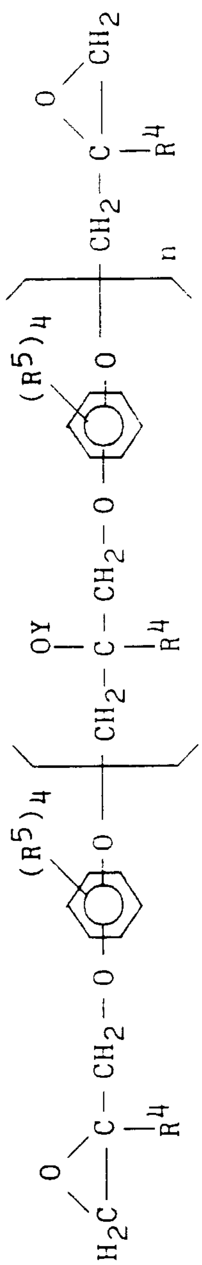

Formula 2

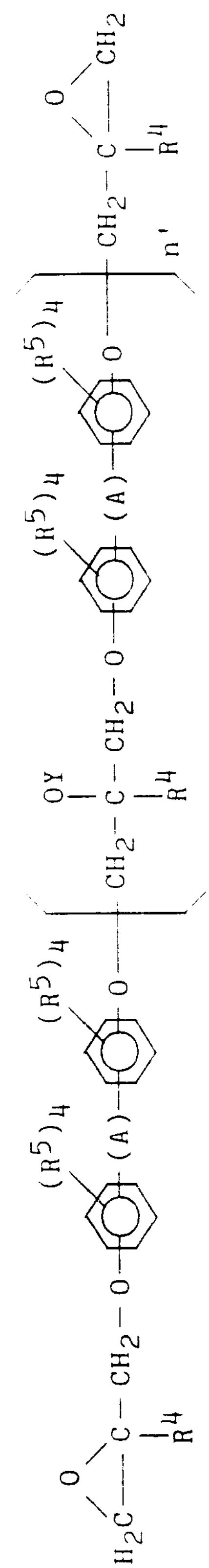

Formula 3

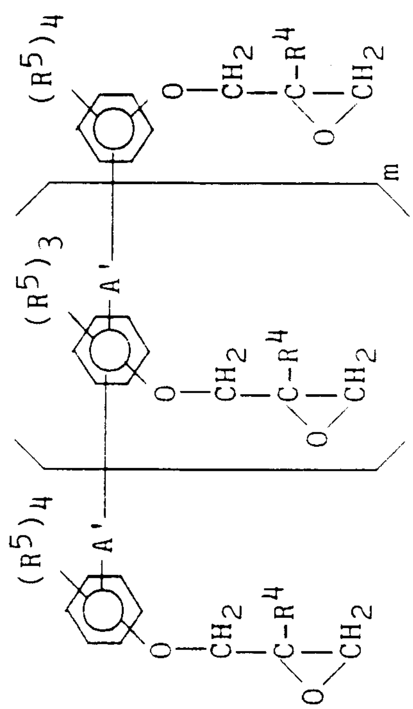

Formula 4

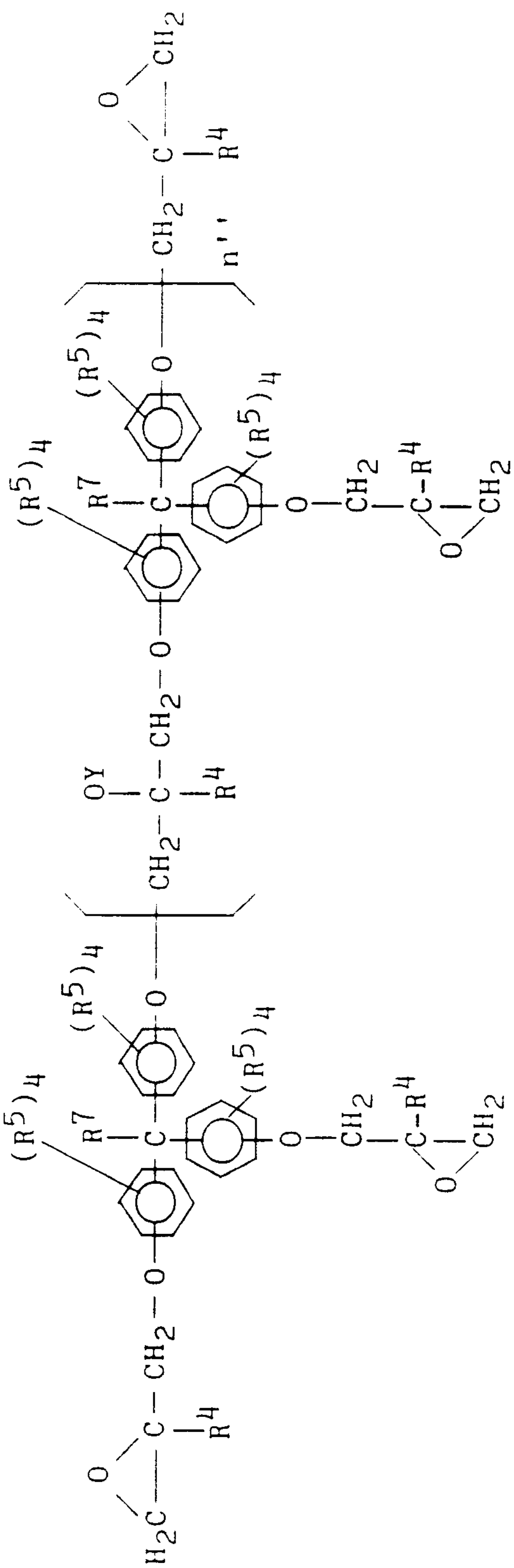

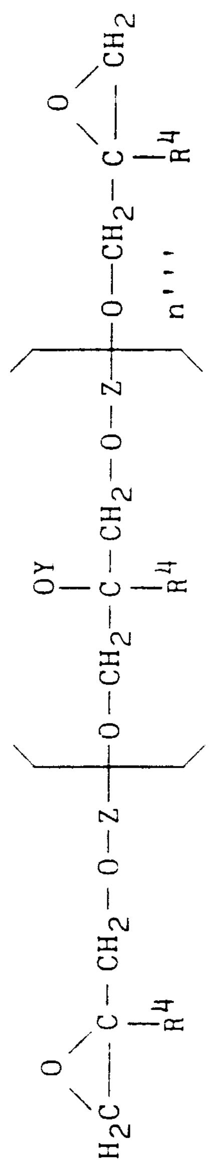

Formula 5

; and

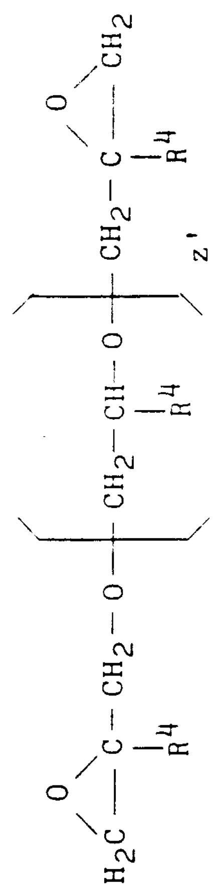

Formula 6

;

wherein

A is independently in each occurrence a direct bond, a hydrocarbylene group having from 1 to 12, preferably from 1 to 6, carbon atoms,

$$-S-,\ -S-S-,\ -\overset{\overset{O}{\|}}{S}-,\ -\underset{\underset{O}{\|}}{\overset{\overset{O}{\|}}{S}}-,\ -\overset{\overset{O}{\|}}{C}-,\ \text{or}\ -O-;$$

Z is independently in each occurrence a hydrocarbylene group containing from 1 to 15 carbon atoms or a $-C(R^6)_2-C(R^6)_2-[O-C(R^6)_2-C(R^6)_2]-_{m'}$ group;

A' is independently in each occurrence a divalent hydrocarbylene group having from 1 to 3, preferably 1, carbon atoms or a polycyclopenta-dienylidenyl radical, that is:

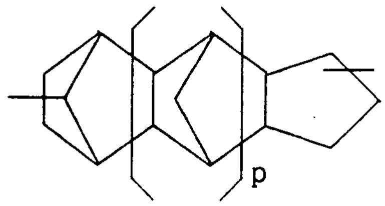

,

in which p has a value of from zero to 10.

In the forgoing Formulas 1-6:

$R^4$ is independently in each occurrence hydrogen or methyl;

$R^5$ is independently in each occurrence hydrogen, bromine, chlorine, a $C_{1-4}$ alkyl, a $C_{1-4}$ alkenyl, or a $C_{1-4}$ alkoxy;

$R^6$ is independently in each occurrence hydrogen or a $C_{1-4}$ hydrocarbyl radical;

$R^7$ is independently in each occurrence hydrogen, a $C_{1-10}$ alkyl, or a $C_{1-10}$ alkenyl;

m has a value of from 0.001 to 6;

m' has a value of from 1 to 100;

n has a value of from zero to 60, preferably zero to 20;

n' has a value of from zero to 40, preferably zero to 0.2;

n'' has a value of from zero to 5, preferably zero to 3;

n''' has a value of from zero to 40, preferably zero to 0.2;

z' has a value of from zero to 20; and

B is independently in each occurrence hydrogen, $R^8$, $-CO-R^8$ or $-CO-O-R^8$, wherein $R^8$ is a $C_{1-15}$ hydrocarbyl radical, preferably a phenyl radical, with the proviso that the average number of B's per molecule of said polyepoxide which are hydrogen is 0.2 or less.

Exemplary of nominally difunctional epoxides of Formula 1 which actually have average oxirane functionalities of somewhat less than 2 but which are suitable include liquid epoxides in which, in each occurrence, each of $R^4$ and $R^5$ are hydrogen and n is within the range of from 0 to 0.15.

Alcoholic hydroxyl groups in the epoxide may be converted to carbonate groups by transesterification in a conventional manner. U.S. Patent 4,782,124 discloses suitable transesterification catalysts and is incorporated herein by reference for all purposes which may legally be served thereby.

Particularly preferred are the following specific epoxides available from The Dow Chemical Company: DER®-331 epoxy resin, DER®-332 epoxy resin, DER®-383 epoxy resin, DER®-542 epoxy resin, DER®-661 to 669 epoxy resins, DER®-732 epoxy resin, DER®-736 epoxy resin, TACTIX®-742 epoxy resin, DEN®-438 epoxy novolac, QUATREX®-6410 epoxy resin, XD-71756.00 epoxy novolac, and XD-71756.01 epoxy novolac (® trademark of The Dow Chemical Company).

The reaction of oxirane groups with aromatic carbonate and/or ester linkages requires use of an initiator/catalyst. With the exception of ethyltriphenyl phosphonium acetate acetic acid complex, compounds known to initiate or catalyze other reactions of epoxides and found to be effective for the epoxide/ester/carbonate reaction typically show activity at relatively low temperatures of 70 °C to 125 °C. It has been found that in many cases, particularly when the compound containing aromatic carbonate and/or ester linkages is a polymer such as polycarbonate, polyester, or polyestercarbonate, the above-mentioned, known initiators/catalysts do not provide a sufficient processing window for melt blending the initiator/catalyst and the epoxy resin with the compound containing carbonate and/or ester linkages.

What is needed is an active and effective initiator/catalyst for the reaction of oxirane groups in epoxy resins with aromatic carbonate and/or ester groups, wherein the activity of said catalyst begins at a temperature of 125 °C or greater. Furthermore, the initiator/catalyst activity should be substantially developed below the decomposition temperature of the epoxy/carbonate/ester composition, which generally begins at 300 °C to 320 °C in air. The initiator/catalyst desirably does not initiate or speed up side reactions to such an extent that there does not result a cured or cross-linked product with an improved combination of properties vis a vis the same epoxy resin per se cured with generally comparable types of initiators/catalysts.

Suitable initiators/catalysts for the practice of the invention include polyorgano, pentavalent phosphorous salts which satisfy the catalyst requirements set forth herein.

Preferred initiators/catalysts may be represented by Formula 8:

$[J(Q)_t]^{\oplus}X^{\ominus}$

wherein

t is zero or 1, preferably 1; when t is zero, J is $R_4P^{\oplus}$ and when t is 1, J is $R_3P$ and Q is is $N^{\oplus}=PR_3$; that is, when t is zero, the salt is a tetraorgano phosphonium compound of Formula 9:

$R_4P^{\oplus}X^{\ominus}$

and when t is 1, the salt is a hexaorgano phosphine iminium compound of Formula 10:

$R_3P=N^{\oplus}=PR_3X^{\ominus}$.

In each of Formulas 9 and 10, R is independently in each occurrence, a $C_{1-20}$ hydrocarbyl group.

In Formula 9, $X^{\ominus}$ is an anion selected from the group consisting of:

$R^1SO_3^{\ominus}$, $R^2COO^{\ominus}$, $(R^3SO_2)_2N^{\ominus}$, $R^1SO_2^{\ominus}$, $R^1OHPO_3^{\ominus}$, $(R^1O)_2PO_2^{\ominus}$, $R^1HPO_3^{\ominus}$, and a halide,

wherein

$R^1$ is a $C_{1-12}$ hydrocarbyl or halohydrocarbyl radical,

$R^2$ is a hydrogen radical, a $C_1-C_{12}$ hydrocarbyl or halohydrocarbyl radical, and

$R^3$ is a $C_{1-12}$ hydrocarbyl radical.

In Formula 10, $X^{\ominus}$ is an anion selected from the group consisting of:

$R^1SO_3^{\ominus}$, $R^2COO^{\ominus}$, $(R^3SO_2)_2N^{\ominus}$, $R^1SO_2^{\ominus}$, $R^1OHPO_3^{\ominus}$, $(R^1O)_2PO_2^{\ominus}$, $R^1HPO_3^{\ominus}$, $H_2PO_4^{\ominus}$, $HCO_3^{\ominus}$, $HSO_4^{\ominus}$, $PF_6^{\ominus}$, $SbF_6^{\ominus}$, and a halide,

wherein

$R^1$, $R^2$ and $R^3$ are as defined above for Formula 9.

In the phosphonium compounds of Formula 9:

$X^{\ominus}$ is preferably $R^1SO_3^{\ominus}$, $R^2COO^{\ominus}$, $(R^3SO_2)_2N^{\ominus}$, or a halide, more preferably $R^1SO_3^{\ominus}$, $(R^3SO_2)_2N^{\ominus}$, or a halide.

$R^1$ is preferably an $C_{1-12}$ alkyl, $C_{1-12}$ haloalkyl, $C_{3-12}$ cycloalkyl, $C_{3-12}$ halocycloalkyl, $C_{6-12}$ alkylaryl, $C_{6-12}$ haloalkylaryl, $C_{6-12}$ aryl, or $C_{6-12}$ haloaryl radical, more preferably a $C_{1-6}$ alkyl, $C_{1-6}$ haloalkyl, $C_{6-12}$ alkylaryl, $C_{6-12}$ haloalkylaryl, phenyl, or halophenyl radical. Halohydrocarbyl radicals are preferably chlorohydrocarbyl radicals, more preferably monovalent $C_{1-6}$ chloroalkyl, $C_{6-12}$ chloroalkylaryl, or chlorophenyl radicals.

$R^2$ is preferably a monovalent $C_{1-12}$ alkyl, $C_{1-12}$ haloalkyl, $C_{3-12}$ cycloalkyl, $C_{3-12}$ halocycloalkyl, $C_{6-12}$ alkylaryl, $C_{6-12}$ haloalkylaryl, $C_{6-12}$ aryl, or $C_{6-12}$ haloaryl radical, more preferably a $C_{1-6}$ alkyl, $C_{1-6}$ haloalkyl, $c_{6-12}$ alkylaryl, $C_{6-12}$ haloalkylaryl, phenyl, or halophenyl radical. Halohydrocarbyl radicals are preferably chlorohydrocarbyl radicals, more preferably $C_{1-6}$ chloroalkyl, $C_{6-12}$ chloroalkylaryl, or chlorophenyl radicals.

$R^3$ is preferably a $C_{1-12}$ alkyl, $C_{3-12}$ cycloalkyl, $C_{6-12}$ alkylaryl, or $C_{6-12}$ aryl radical, more preferably a $C_{1-6}$ alkyl, $C_{6-12}$ alkylaryl, or phenyl radical.

In the phosphine aminium compounds of Formula 10, the R radicals are preferably $C_{1-12}$ alkyl, $C_{3-12}$ cycloalkyl, $C_{6-20}$ alkylaryl, or $C_{6-12}$ aryl radicals, more preferably $C_{1-6}$ alkyl, $C_{6-12}$ alkylaryl, or phenyl radicals, even more preferably $C_{1-4}$ alkyl, $C_{6-8}$ alkylaryl, or phenyl radicals, most preferably ethyl, butyl, or phenyl.

$X^{\ominus}$ is preferably an anion selected from the group consisting of $R^1SO_3^{\ominus}$, $R^2COO^{\ominus}$, $(R^3SO_2)_2N^{\ominus}$, $R^1SO_2^{\ominus}$,$R^1OHPO_3^{\ominus}$, $(R^1O)_2PO_2^{\ominus}$, $R^1HPO_3^{\ominus}$, and a halide, more preferably $R^1SO_3^{\ominus}$, $R^2COO^{\ominus}$, $(R^3SO_2)_2N^{\ominus}$, and a halide, even more preferably $R^1SO_3^{\ominus}$, $(R^3SO_2)_2N^{\ominus}$, and a halide.

$R^1$ is preferably a $C_{1-12}$ alkyl, $C_{1-12}$ haloalkyl, $C_{3-12}$ cycloalkyl, $C_{3-12}$ halocycloalkyl, $C_{6-12}$ alkylaryl, $C_{6-12}$ haloalkylaryl, $C_{6-12}$ aryl, or $C_{6-12}$ haloaryl radical, more preferably a $C_{1-6}$ alkyl, $C_{1-6}$ haloalkyl, $C_{6-12}$ alkylaryl, $C_{6-12}$ haloalkylaryl, phenyl, or halophenyl radical. Preferred halohydrocarbyl radicals include chlorohydrocarbyl radicals. More preferred halohydrocarbyl radicals include $C_{1-6}$ chloroalkyl, $C_{6-12}$ chloroalkylaryl, or chlorophenyl radicals.

$R^2$ is preferably a $C_{1-12}$ alkyl or haloalkyl, $C_{3-12}$ cycloalkyl, $C_{3-12}$ halocycloalkyl, $C_{6-12}$ alkylaryl, $C_{6-12}$ haloalkylaryl, $C_{6-12}$ aryl, or $C_{6-12}$ haloaryl radical, more preferably a $C_{1-6}$ alkyl or haloalkyl, $C_{6-12}$ alkylaryl, $C_{6-12}$ haloalkylaryl, phenyl, or halophenol radical. Preferred halohydrocarbyl radicals include

chlorohydrocarbyl radicals. More preferred halohydrocarbyl radicals include $C_{1-6}$ chloroalkyl, $C_{6-12}$ chloroalkylaryl, or chlorophenyl radicals.

$R^3$ is preferably a $C_{1-12}$ alkyl, $C_{3-12}$ cycloalkyl, $C_{6-12}$ alkylaryl, or $C_{6-12}$ aryl radical, more preferably a $C_{1-6}$ alkyl, $C_{6-12}$ alkylaryl, or phenyl radical.

In Formulas 9 and 10, halides suitable as the anion $X^{\ominus}$ include chloride, bromide, iodide, and fluoride. Preferred halides include chloride, bromide, and iodide; more preferred halides include chloride and bromide.

As used herein, the terms halohydrocarbyl, haloalkyl, halocycloalkyl, haloalkylaryl, and haloaryl refer to radicals comprising one to three bromo-, chloro-, iodo-, or fluoro- substituents.

Whenever $X^{\ominus}$ in a salt of either of Formulas 9 and 10 is a carboxylate anion, the salt may be in the form of a complex with one or more molecules of the corresponding free acid per molecule of the salt.

The phosphonium salts employed in this invention may be prepared by an in situ method or a hydroxide method.

In the in situ method, a first solution is prepared by dissolving the appropriate tetraorgano-phosphonium halide, preferably chloride ($R_4P^{\oplus}Cl^{\ominus}$) or bromide ($R_4P^{\oplus}Br^{\ominus}$), in an alcohol such as methanol. The appropriate acid of the anion $X^{\ominus}$, in an alcohol such as methanol, is added to the first solution. A second solution is prepared by dissolving an alkali metal hydroxide, such as sodium or potassium hydroxide, in an alcohol such as methanol. The two solutions are mixed to form a precipitate. Toluene may be added to the mixture. The mixture is filtered and vacuum stripped to yield the tetraorgano-phosphonium salt $R_4P^{\oplus}X^{\ominus}$ as a crude product.

In the hydroxide method, a first solution is prepared by dissolving an alkali metal hydroxide, such as sodium or potassium hydroxide, in an alcohol such as methanol. A second solution is prepared by dissolving the appropriate tetraorgano-phosphonium halide, preferably chloride ($R_4P^{\oplus}Cl^{\ominus}$) or bromide ($R_4P^{\oplus}Br^{\ominus}$), in an alcohol such as methanol. The second solution is chilled and held at a temperature below 10°C while adding the first solution with agitation. A precipitate of the alkali metal halide is removed by filtration, leaving a third solution of appropriate tetraorgano-phosphonium hydroxide ($R_4P^{\oplus}OH^{\ominus}$). A fourth solution is prepared containing the appropriate acid of the anion $X^{\ominus}$ in an alcohol such as methanol. The third and fourth solutions are combined to give a precipitate of the tetraorgano-phosphonium salt ($R_4P^{\oplus}X^{\ominus}$) which is recovered as a crude product by vacuum stripping.

The novel phosphine iminium salts employed in this invention may be prepared by several methods, including an aqueous anion exchange method, an hydroxide method, and a silver salt method.

In the aqueous anion exchange method, a first solution is formed by dissolving the appropriate phosphine iminium halide, preferably the chloride, $R_6P_2N^{\oplus}Cl^{\ominus}$ or bromide $R_6P_2N^{\oplus}Br^{\ominus}$, in an alcohol such as methanol. Water is then added to the solution. A second solution is formed by dissolving the appropriate alkali metal $X^{\ominus}$ salt, preferably the sodium salt, in water. The two solutions are mixed together, forming a precipitate which is the crude phosphine iminium salt $R_6P_2N^{\oplus}X^{\ominus}$. The reaction is preferably carried out at ambient temperatures. The precipitate is recovered by filtration, purified by water-washing, and dried.

In the hydroxide method, a first solution is formed by dissolving the appropriate phosphine iminium halide, preferably the chloride $R_6P_2N^{\oplus}Cl^{\ominus}$ or bromide $R_6P_2N^{\oplus}Br^{\ominus}$, in an alcohol such as methanol. The solution is chilled, preferably to a temperature below 10°C. A second solution is formed by dissolving an alkali metal hydroxide, such as sodium or potassium hydroxide, in an alcohol such as methanol. The second solution is added dropwise with agitation to the first solution while maintaining the temperature below 10°C. The mixture becomes a slurry which is filtered to recover the alkali metal halide precipitate. The remaining third solution contains the phosphine iminium hydroxide. A fourth solution is formed by dissolving the appropriate $X^{\ominus}$ acid in an appropriate solvent such as methanol. The fourth solution is then mixed with the solution of the phosphine iminium hydroxide. The resulting mixture is then filtered and vacuum stripped to obtain a solid which is the crude phosphine iminium salt $R_6P_2N^{\oplus}X^{\ominus}$.

In the silver salt method, the appropriate silver X salt is dissolved in a solvent such as acetone to form a first solution. The appropriate phosphine iminium halide, preferably the chloride $R_6P_2N^{\oplus}Cl^{\ominus}$ or bromide $R_6P_2N^{\oplus}Br^{\ominus}$, is dissolved in a solvent such as acetone to form a second solution. The two solutions are mixed and the silver halide precipitate which forms is removed by filtration. The remaining solution is vacuum stripped to obtain a solid which is the crude phosphine iminium salt $R_6P_2N^{\oplus}X^{\ominus}$.

The polyorgano phosphorous salts produced by the foregoing methods are able, even in crude form, to meet the activity requirements for initiators/catalysts used in the present invention.

The crude phosphonium salts are generally pure enough as such to yield elemental analyses acceptably close to the theoretical values for purposes of identification.

The crude phosphine iminium compounds preferably are purified, as for example, by recrystallization. This may be carried out by conventional methods, such as by using the following procedure.

The crude salt is dissolved with heating in a minimum of an alcohol such as ethanol. A small amount of hot water is added dropwise with stirring until a faint cloudiness is observable. The hot mixture is hot-filtered. The filtrate is allowed to cool slowly to room temperature and then chilled. The resulting crystalline precipitate is cold-filtered, washed with a little of a cold, dilute solution of water in the same alcohol, and then dried in vacuo at room temperature overnight. The dry salt is sampled and analyzed with conventional precautions taken to prevent moisture take up.

Such initiators/catalysts preferably exhibit activity as determined by the secant onset temperature obtained by Differential Scanning Calorimetry (DSC) of above 125 °C at a scanning rate of 10 °C/minute. The initiator/catalyst activity is well developed below the decomposition temperature of the polymer and epoxy resin mixture, preferably below 320 °C, more preferably below 300 °C, even more preferably below 260 °C. See U.S. Patent Application Serial Number 07/358,297, filed May 25,1989 and U.S. Patent Application Serial Number 07/358,319, filed May 25, 1989; the relevant portions relating to initiator/catalyst activity incorporated herein by reference for all legal purposes served thereby.

The membranes of this invention are substantially derived from a reaction product of an epoxy resin and a thermoformable, thermosettable aromatic polymer selected from the group consisting of polycarbonate, polyestercarbonate, polyester, and a combination thereof.

The membranes of this invention may possess any configuration known to one skilled in the art. In particular, the membranes may be formed in the shape of flat sheets or films and hollow fibers of various cross-sectional shapes, including hollow tubes. Films and hollow fibers of substantially circular cross-section are preferred membrane configurations.

In addition, the membranes of this invention may possess any morphological structure known to one skilled in the art. In particular, the membranes may be a homogeneous membrane, a composite membrane, or an asymmetric membrane. Asymmetric and composite membranes are preferred. In the embodiment wherein the membranes possess a hollow fiber configuration, asymmetric membranes may have the discriminating region either on the outside of the hollow fiber, at the inside (lumen) surface of the hollow fiber, or located somewhere internal to both outside and inside hollow fiber membrane surfaces. In the embodiment wherein the discriminating region of the hollow fiber membranes is internal to both hollow fiber membrane surfaces, the inside surface and the outside surface of the hollow fiber membranes are porous, yet the membranes demonstrate the ability to separate gases.

The membranes are prepared by forming a mixture of a polymer, an epoxy resin, a catalyst, a solvent, and an optional non-solvent. The mixture is preferably formed at temperatures below which substantial cross-linking occurs so as to enable the mixture to be cast or extruded into membranes prior to cross-linking the epoxy resin and polymer. The temperature at which substantial cross-linking occurs will differ depending upon the identity and ratio of components in the mixture and is particularly dependent upon the initiator/catalyst employed. The temperature at which substantial cross-linking occurs is readily determined empirically for a given mixture by measuring the secant onset temperature by Differential Scanning Calorimetry (DSC). Mixing preferably occurs below 125 °C, more preferably below 110 °C.

Preferred solvents include compounds which dissolve at least 5 weight percent of the polymer at the membrane fabrication temperature. See U.S. Patent 4,962,131, the relevant portions regarding solvents incorporated herein by reference for all legal purposes served thereby. Preferred solvents include a glycol ether which corresponds to the formula $R^{33}O\text{-}(CH_2CH_2O)_{r'}\text{-}R^{33}$, wherein $R^{33}$ is methyl or ethyl and r' is an integer of between 1 and 20; a dialkyl ketone, wherein the alkyl groups independently are methyl or ethyl; morpholine substituted on the nitrogen atom with an alkyl, formyl, or alkanoyl moiety; unsubstituted or N-$C_{1-4}$ alkyl, N-$C_{5-6}$ cycloalkyl, or N-$C_{6-10}$ aryl or alkaryl substituted pyrrolidinone; $C_{1-4}$ alkoxycarbonyl, formyl, nitro, or halo-substituted benzene; tetrahydrofuran; dimethyl formamide, cyclohexanone; N,N-dimethyl acetamide, acetophenone; caprolactone; methylene chloride; chloroform; trichloroethylene; sulfolane; cyclohexyl acetate; 1,1,3,3-tetramethylurea; isophorone; 1-formyl-piperidine; methyl salicylate; hexamethyl-phosphoramide; phenyl ether; and bromonaphthalene.

The glycol ethers useful as a solvent correspond to the formula $R^{33}O\text{-}(CH_2CH_2O)_{r'}\text{-}R^{33}$, wherein $R^{33}$ is methyl or ethyl and r' is an integer of between 1 and 20. Preferably, r' is an integer of between 1 and 10, even more preferably between 1 and 4, and most preferably when $R^{33}$ is methyl r' is between 1 and 4 and when $R^{33}$ is ethyl r' is between 2 and 4. Examples of such glycol ethers include ethylene glycol dimethyl ether, diethylene glycol dimethyl ether, and bis (2-methoxy-ethyl ether). Preferred dialkyl ketones useful as a solvent include dimethyl ketone, diethyl ketone, and methyl ethyl ketone. Preferred substituted morpholines include those with a $C_{1-10}$ alkyl, formyl, or a $C_{1-10}$ alkanoyl moiety substituted on the nitrogen atom; more preferred include those with a $C_{1-4}$ alkyl, formyl, or a $C_{1-4}$ alkanoyl moiety substituted on the nitrogen atom. Examples of substituted morpholines include N-formylmorpholine and N-ethylmorpholine. Preferred pyrrolidinones useful as solvents include pyrrolidinone, N-methyl-2--pyrrolidinone, N-ethyl-2--pyrrolidinone, N-cyclohexyl pyrrolidinone, N-benzyl pyrrolidinone, and N-phenyl pyrrolidinone. The term pyrrolidinone as used herein refers to compounds named as pyrrolidinones and pyrrolidones.

Preferred substituted benzenes useful as solvents correspond to the formula:

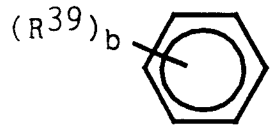

wherein

$R^{39}$ is a $C_{1-4}$ alkoxycarbonyl, nitro, halo, or a formyl moiety; and

b is an integer of 1 to 6, with the proviso that wherein $R^{39}$ is alkoxycarbonyl, b is 1.

The preferred halogens are chlorine and bromine, with chlorine most preferred. Preferably b is between 1 and 3. Examples of substituted benzenes useful as solvents include chlorobenzene, dichlorobenzene, benzaldehyde, nitrobenzene, ethyl benzoate, methyl benzoate, and 1,2,4-trichlorobenzene.

More preferred solvents include N-methyl-2--pyrrolidinone, tetrahydrofuran, ethylene glycol dimethylether, diethylketone, N-ethylmorpholine, dimethylformamide, cyclohexanone, bis(2-methoxyethylether), N,N-dimethylacetamide, acetophenone, methylene chloride, chloroform, trichloroethylene, sulfolane, and dimethylsulfoxide. Even more preferred solvents include methylene chloride, chloroform, trichloroethylene, N-methyl-2-pyrrolidinone, N,N-dimethylacetamide, sulfolane, and dimethylsulfoxide.

Preferred non-solvents include compounds which dissolve less than 5 weight percent of the polymer at the membrane fabrication temperature. See U.S. Patent 4,962,131, the relevant portions regarding non-solvents incorporated herein by reference for all legal purposes served thereby. Preferred non-solvents include a glycol or glycol ether which corresponds to the formula $R^{34}O\text{-}(CH_2CH_2O)_{q'}\text{-}R^{34}$, wherein $R^{34}$ is independently in each occurrence hydrogen or a $C_{1-4}$ alkyl and q' is an integer of 1 to 250; an ester corresponding to the formula $R^{35}COOR^{36}$, wherein $R^{35}$ is hydrogen or a $C_{1-19}$ alkyl and $R^{36}$ is a $C_{1-10}$ alkyl; a $C_{1-10}$ alkanol; cyclohexane, unsubstituted or substituted with an alkyl, cycloalkyl, or perfluoroalkyl moiety; a $C_{5-20}$ alkane; a dialkyl ketone, wherein at least one of the alkyl moieties is $C_3$ or greater; an amide corresponding to the formula $R^{37}CONHR^{38}$, wherein $R^{37}$ is hydrogen or a $C_{1-10}$ alkyl and $R^{38}$ is a $C_{1-10}$ alkyl; an acetyl or a $C_{1-10}$ alkyl nitrile; acetone; a $C_{1-10}$ alkyl aldehyde; a trialkyl amine; nitromethane; trialkyl orthoformate; diacetone alcohol; dimethyl malonate; decahydronaphthalene; tetrahydronaphthalene; malononitrile; ethylene carbonate; sulfolane; alkyl or cycloalkyl substituted benzene; and water.

The glycols and glycol ethers useful as non-solvents correspond to the formula $R^{34}O\text{-}(CH_2CH_2O)_{q'}\text{--}R^{34}$, wherein $R^{34}$ is independently in each occurrence hydrogen or a $C_{1-4}$ alkyl and q' is an integer of 1 to 250. Preferably $R^{34}$ is hydrogen. Preferably q' is an integer of 2 to 100, more preferably of 3 to 60, and most preferably of 3 to 15. Examples of such glycols and glycol ethers include 2-ethoxyethanol, diethylene glycol dibutyl ether, a polyethylene glycol with a molecular weight of up to 1450, triethylene glycol, and diethylene glycol. Esters useful as non-solvents correspond to the formula $R^{35}COOR^{36}$, wherein $R^{35}$ is hydrogen or a $C_{1-19}$ alkyl and $R^{36}$ is a $C_{1-10}$ alkyl. Preferably $R^{35}$ is hydrogen or a $C_{1-4}$ alkyl and $R^{36}$ is a $C_{1-4}$ alkyl. Most preferably $R^{36}$ is ethyl or methyl. Examples of preferred esters include methyl formate, ethyl formate, methyl acetate, n-octyl acetate, methyl laurate, methyl myristate, butyl stearate, and methyl stearate. Preferred alkanols useful as non-solvents include methanol, ethanol, 2-propanol, and 1-hexanol. Preferred cyclohexanes useful as non-solvents include those which are unsubstituted or substituted with a $C_{1-10}$ alkyl, a $C_{3-10}$ cycloalkyl, or a $C_{1-4}$ perfluoroalkyl moiety. More preferred cyclohexanes useful as non-solvents include those which are unsubstituted or substituted with a $C_{1-4}$ alkyl, a $C_{5-6}$ cycloalkyl, or trifluoromethyl moiety. Examples of such cyclohexanes include cyclohexane, methylcyclohexane, isopropylcyclohexane, t-butylcyclohexane, and dicyclohexyl. Preferred $C_{5-20}$ alkanes useful as non-solvents include hexane, dodecane, and hexadecane. Preferred dialkyl ketones useful as non-solvents for the polycarbonates include those wherein one of the alkyl moieties is $C_{3-10}$ and the other is $C_{1-10}$. Examples of preferred dialkyl ketones useful for non-solvents include methyl isobutyl ketone and diisopropyl ketone. Preferred amides useful as non-solvents include those amides corresponding to the formula $R^{37}CONHR^{38}$, wherein $R^{37}$ is preferably hydrogen or a $C_{1-3}$ alkyl and $R^{38}$ is preferably a $C_{1-4}$ alkyl. Examples of preferred amides include N-methyl formamide, and N-methyl acetamide. Preferred nitriles include acetyl and $C_{1-3}$ alkyl nitriles. Examples of preferred nitriles include acetonitrile and propionitrile. Preferred aldehydes are $C_{1-4}$ alkyl aldehydes, with butyraldehyde being more preferred. Preferred substituted benzenes include

formyl, alkyl, and cycloalkyl substituted benzenes which correspond to the formula

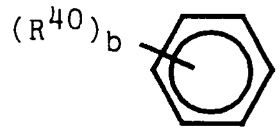

wherein

$R^{40}$ is a $C_{1-10}$ alkyl, a $C_{3-10}$ cycloalkyl, or formyl, and

b is as defined hereinbefore.

Preferably, $R^{40}$ is a $C_{1-4}$ alkyl, a $C_{5-6}$ cycloalkyl, or formyl.

Preferred non-solvents include triethylene glycol, 2-ethoxyethanol, diethylene glycol dibutyl ether, a polyethylene glycol with a molecular weight of up to 1450, diethylene glycol, dodecane, hexadecane, cyclohexane, methylcyclohexane, perchloroethylene, diisopropylketone, isopropylketone, isopropylcyclohexane, t-butylcyclohexane, N-methylformamide, decylene, N-methylacetamide, tetralin, dicyclohexyl, cyclohexyl benzene, diethylene glycol dibutylether, carbon tetrachloride, and water. More preferred non-solvents include water, diisopropylketone, tetraethylene glycol dimethylether, diethylene glycol dibutyl ether, hexadecane, diethylene glycol, triethylene glycol, polyethylene glycol with a molecular weight of up to 1450, 2-ethoxyethanol, carbon tetrachloride, and dodecane.

The solvent and non-solvent should be chosen to be compatible. In particular, the non-solvent must be soluble in the solvent, and the non-solvent must be capable of forming pores in the quenched polymer in the presence of the solvent. Skilled artisans often describe the solvent and non-solvent as a solvent and non-solvent pair. Preferred solvent and non-solvent pairs include N-methyl-2-pyrrolidinone and triethylene glycol, N-methyl-2-pyrrolidinone and a polyethylene glycol with a molecular weight of up to 1450, ethylene glycol dimethylether and water, tetrahydro-furan and water, ethylene glycol dimethylether and diisopropylketone, tetrahydrofuran and diisopropylketone, diethylene glycol dimethylether and water, diethylene glycol dimethylether and tetralin, tetraethylene glycol dimethylether and N-methylacetamide, acetophenone and diethylene glycol dibutylether, methylene chloride and carbon tetrachloride, cyclohexanone and dodecane, and acetophenone and hexadecane. More preferred solvent and non-solvent pairs include N-methyl-2-pyrrolidinone and triethylene glycol, N-methyl-2-pyrrolidinone and a polyethylene glycol with a molecular weight of up to 1450, cyclohexanone and dodecane, and acetophenone and hexadecane.

The concentration of polymer, epoxy resin, and initiator/catalyst in the mixture is preferably at least 20 weight percent, more preferably of at least 25 weight percent, even more preferably of at least 35 weight percent; the concentration of polymer, epoxy resin, and initiator/catalyst in the mixture is preferably less than 80 weight percent, more preferably less than 70 weight percent, even more preferably less than 65 weight percent. The balance of the mixture is comprised of solvent and an optional non-solvent. In the absence of non-solvent, the concentration of solvent in the mixture is preferably at least 20 weight percent, more preferably at least 30 weight percent, even more preferably at least 35 weight percent; the concentration of solvent in the mixture is preferably less than 80 weight percent, more preferably less than 75 weight percent, even more preferably less than 65 weight percent. When the optional non-solvent is used in the mixture, the ratio of solvent to non-solvent in the mixture is preferably between 1.7 to 5.1, more preferably between 1.8 and 2.7, even more preferably between 2.0 and 2.5.

The amount of epoxy resin in the mixture is sufficient to promote cross-linking of at least one of the surfaces of the fabricated membrane. Each epoxide-reactive carboxylate group in a polyester is capable of reacting with one oxirane group. Thus, if all oxiranes in the epoxide are to be converted by carboxylate groups, the theoretical maximum oxirane to ester ratio will be 1/1. Each oxirane-reactive carbonate group in a polycarbonate is presumed capable of reacting out two oxiranes. Accordingly, if all the oxiranes are to be converted by carbonate groups, the theoretical maximum number ratio of oxirane to carbonate groups will be 2:1. However, somewhat higher ratios may be acceptable. Lower ratios are acceptable down to the lowest ratio at which the proportion of epoxide in the reaction product is still sufficient to result in improved physical or chemical properties or improved membrane selectivity in the partially or fully cured or cross-linked fabricated membrane as compared to the uncross-linked membrane. The ratio of epoxide groups to polymer repeat units (ester or carbonate groups) is preferably between 1:15 and 1:1, more preferably between 1:10 and 1:2, even more preferably between 1:7 and 1:4.

It has been found that in some instances the cured or cross-linked epoxy resin/polymer reaction product has a higher glass transition temperature (Tg) if there is present a small excess of the epoxide in the

mixture of reactants.

Any minor amount of unconverted oxiranes in a cured product may optionally be eliminated by post treatment which does not result in the presence of hydrophilic groups in the final product.

The calculation of reactant weight ratios from the oxirane to "ester" number ratios is according to well know principles, but it must be kept in mind that one carbonate group is, in effect, two reactive groups for the epoxide/carbonate reaction. The molecular weight of the repeating unit, which contains only one carbonate group, in a typical bisphenol A polycarbonate is 254, but the "reactive equivalent weight" of the polycarbonate is only one-half of 254, that is, 127. For a typical epoxide, for example DER-332® epoxy resin (® trademark of The Dow Chemical Company) which approximates the pure diglycidyl ether of bisphenol A, the epoxy equivalent weight (EEW), that is, the grams of epoxide which provide one gram molecular weight of oxirane, is 172. Therefore, the weight ratio of epoxide to polycarbonate corresponding to a 2:1 number ratio of oxirane to carbonate groups is (2 x 172) ÷ 254 or 172 ÷ 127 = 57.5/42.5.

For example, an aromatic "copolyestercarbonate in which the number ratio of carboxylate to carbonate groups is 3:1, the epoxy reactive equivalent weight is 162.34. Based on one oxirane reacting with each carboxylate linkage and two oxiranes reacting with each carbonate group, the weight ratio of epoxide to polyester for a 1:1 "mole" ratio is 172/162.34 or 51.4/48.6.

The initiator/catalyst concentration in the mixture should generally be within the range of from 0.00015 to 0.0300 mmoles/gram of the neat epoxide and polymer reactants; the preferred range is from 0.00060 to 0.025 mmoles/gram, more preferably from 0.0075 to 0.020 mmoles/gram.

The above mixtures are used to prepare homogeneous, asymmetric, or composite membranes.

Homogeneous membranes are prepared by forming a thin discriminating layer which is dense and free of voids and pores. Such membranes possess a discriminating layer which generally has substantially the same structure and composition throughout the membrane. In one preferred embodiment, a polymer, along with an epoxy resin and a catalyst, is dissolved in a solvent, thus forming a polymer, epoxy resin, initiator/catalyst, and solvent mixture in solution which is cast onto a uniform surface from which the membrane may thereafter be readily separated. Preferred casting solvents for the polymers useful in this invention include chlorinated solvents such as methylene chloride, chloroform, and trichloroethylene and dipolar aprotic solvents such as N-methyl-2-pyrrolidinone, N,N-dimethyl-acetamide, dimethylsulfoxide, sulfolane, and dimethylsulfoxide. The solution should be substantially homogeneous and possess sufficient viscosity to allow casting of the solution onto a substantially uniform surface. The ratio of components in the solution is as described hereinabove.

The solution is cast onto a uniform surface possessing a low surface energy such as silicone or coated glass, or a surface to which the membrane will not adhere such as mercury, or a liquid with which the polymer is substantially immiscible such as water. Alternately, the membrane may be cast onto a surface which may be dissolved away from the membrane following removal of solvent. Casting is performed by pouring the solution onto the appropriate surface and using an appropriate tool to form a film of the appropriate thickness. A continuous casting process may be achieved by casting the solution onto endless belts or rotating drums. Thereafter, the cast solution is exposed to conditions to substantially remove solvent by exposing the cast solution to a vacuum, exposing the cast solution to elevated temperatures, by allowing the solvent to evaporate over time, or any combination thereof. Generally, it is preferable to expose the cast solution to elevated temperatures which are below the glass transition temperature of the polymer and below that temperature at which substantial cross-linking occurs, preferably less than 125° C, more preferably less than 110° C, even more preferably less than 90° C. Such conditions are used to substantially remove the solvent, thereby leaving a thin discriminating layer of polymer which is substantially homogeneous. The membrane is then cured or cross-linked as hereinafter described for asymmetric membranes.

Composite membranes are prepared by forming a thin discriminating layer of the polymer on a porous supporting layer. Such membranes possess a discriminating layer which generally has a different structure and composition than the porous supporting layer. To prepare a composite membrane, a homogeneous discriminating layer can be formed and thereafter adhered to a porous supporting layer. Alternatively, the porous supporting layer can be the surface upon which the discriminating layer is cast. In such an embodiment, the composite membrane is prepared by casting a solution as a coating on the porous support. Penetration of the polymer from which the discriminating layer is formed into the pores of the porous supporting layer is acceptable so long as the desired thickness of the membrane is not exceeded. The porous supporting layer is characterized in that it preferably does not significantly impede the transport of gas through the membrane. In one embodiment, the porous supporting layer can be a metal or polymeric plate with a plurality of holes drilled through it. However, such a drilled plate is not advantageous because it may significantly reduce the effective area of the membrane. In a preferred embodiment, the porous supporting layer is a porous polymeric membrane. Examples of such porous polymeric membranes suitable

as porous supporting layers in composite membranes include porous cellulose ester and polysulfone porous membranes commercially available under the tradenames MILLIPORE, PELLICONE, and DIAFLOW. Other preferred porous supporting layers include porous membranes fabricated from polycarbonates, polyestercarbonates, polyethersulfones, polyimides, and polyetherimides. Where such porous supporting membranes are thin or highly deformable, a frame or screen may also be used to adequately support the membrane. In one especially preferred embodiment, the porous polymeric supporting layer is a hollow fiber of a porous polymeric membrane such as a microporous polysulfone membrane. The hollow fiber itself provides adequate support for the discriminating layer coated on the inside or the outside surface of the hollow fiber. After the solution is cast onto the porous supporting layer to form the thin discriminating layer, the membrane is then exposed to conditions to substantially remove solvent from the discriminating layer such as described hereinbefore for the formation of homogeneous membranes. The membranes are then cross-linked or cured as hereinafter described for asymmetric membranes.

Asymmetric membranes are prepared by forming a thin discriminating layer on a porous supporting layer. Such membranes possess a discriminating layer which generally has the same composition but a different structure than the porous supporting layer. To prepare an asymmetric membrane, a solution of polymer, epoxy resin, catalyst, solvent, and optional non-solvent is formed and cast as hereinbefore described for homogeneous membranes. Preferred non-solvents for use in this invention are described hereinabove. The cast solution is treated so as to remove a portion of the solvent and optional non-solvent. Thereafter, one or both surfaces of the membrane is contacted with a non-solvent for the polymer such as water so as to form a thin discriminating layer on one or both sides of the membrane while substantially removing the solvent and optional non-solvent from the membrane. The porous supporting layer formed provides support for the thin discriminating layer without significantly impeding the transport of gas through the membrane. The membranes are thereafter exposed to cross-linking conditions as hereinafter described.

Flat sheet, tubular, and hollow fiber membranes which are homogeneous, composite, or asymmetric may be formed by extrusion from an appropriate solution of the polymer, epoxy resin, and catalyst in a solvent and optional non-solvent. Such extrusion processes are well known to those skilled in the art and the formation of such membranes requires the adaptation of the hereinbefore described techniques.

Extrusion is the preferred process for the fabrication of flat sheet, tubular, or hollow fiber membranes. In the case of extrusion, the components of the extrusion mixture may be combined prior to extrusion by mixing in any convenient manner with conventional mixing equipment, as for example, in a Hobart mixer. Alternately, the extrusion mixture may be homogenized by extruding the mixture through a twin screw extruder, cooling the extrudate, and grinding or pelletizing the extrudate to a particle size readily fed to a single or twin screw extruder. The components of the extrusion mixture may also be combined directly in a melt-pot or twin screw extruder and extruded into membranes in a single step.

The polymer, epoxy resin, initiator/catalyst, solvent, and optional non-solvent mixture is heated to a temperature at which the mixture becomes a substantially homogeneous fluid. The homogeneous fluid is then extruded through a sheet, hollow tube, or hollow fiber die (spinnerette). Hollow fiber spinnerettes are typically multi-holed and thus produce a tow of multiple hollow fibers. The hollow fiber spinnerettes include a means for supplying fluid to the core of the extrudate. The core fluid is used to prevent collapse of the hollow fibers as they exit the spinnerette. The core fluid may be a gas such as nitrogen, air, carbon dioxide, or other inert gas, or a liquid which is a non-solvent for the polymer such as water.

The extrusion temperature is sufficiently below the temperature at which substantial cross-linking occurs so that the membrane may be readily formed. Preferably the extrusion temperature is less than 125°C, more preferably less than 120°C, even more preferably less than 110°C. The membranes may be extruded by a process similar to that described in U.S. Patents 4,772,392, and 4,955,993, the relevant portions relating to membrane extrusion incorporated herein by reference for all legal purposes served thereby. Following extrusion, the membrane is treated as hereinbefore described for homogeneous, composite, or asymmetric membranes.

Once the membranes are formed, the membranes are preferably cross-linked before use. The membrane is preferably exposed to temperatures above 125°C, more preferably above Tg' - 30°C, even more preferably above Tg' - 15°C; the membrane is preferably exposed to temperatures below Tg' + 20°C, more preferably below Tg' + 10°C, even more preferably below Tg' for a period of time sufficient to at least partially cross-link the polymer and epoxy resin; wherein Tg' is the glass transition temperature of the polymer or the polymer/resin mixture. Such curing or cross-linking may take place at a single temperature or at a series of different temperatures. This procedure may optionally be performed under vacuum.

A partial curing or cross-linking operation may optionally be carried out concurrently with a shaping step, which may then be followed by cooling, reshaping and storage and/or by further thermal processing,

which may include completion of curing by further heating. Thus, while in the thermoplastic partially cured state, the composition may readily be given a desired physical shape as a membrane by such methods as hereinbefore described, that is, by extrusion, including compression, injection, or transfer molding, casting, lamination, coating, and/or drawing. Ultimate structural and environmental resistance physical properties or membrane separation performance may then be achieved by subsequent cross-linking, that is, thermosetting or curing of the polymer and epoxy resin.

Preferably, the homogeneous membranes useful in this invention have a thickness of between 5 microns and 500 microns, more preferably between 5 microns and 250 microns, even more preferably between 10 microns and 150 microns. Hollow fiber homogeneous membranes preferably have an outer diameter of between 50 microns and 800 microns, more preferably between 50 microns and 500 microns. Preferably the discriminating layer in composite or asymmetric membranes possesses a thickness of between 0.005 microns and 10 microns, more preferably between 0.01 and 5 microns, even more preferably between 0.02 microns and 1 micron. Preferably the supporting layer in composite or asymmetric membranes possesses a thickness of between 5 microns and 500 microns, more preferably between 5 microns and 250 microns, even more preferably between 10 microns and 150 microns. Hollow fiber composite or asymmetric membranes preferably have an outer diameter in the range of from 50 microns to 800 microns, more preferably in the range of from 50 microns to 500 microns.

The membranes are fabricated into flat sheet, spiral wound, tubular, or hollow fiber devices by methods known in the art. See U.S. Patents 3,228,876; 3,422,008; 3,455,460; 3,475,331; 3,526,001; 3,528,553; 3,690,465; 3,702,658; 3,755,034; 3,801,401; 4,271,900; 3,872,014; 3,966,616; 4,045,851; 4,061,574; 4,080,296; 4,083,780; 4,220,535; 4,235,723; 4,265,763; 4,315,819; 4,430,219; 4,351,092; 4,367,139; 4,666,469; 4,707,267; 4,752,305; 4,758,341; 4,871,379; 4,929,259; and 4,961,740; the relevant portions of each patent relating to membrane device design and fabrication incorporated herein by reference for all legal purposes which may be served thereby.

The membranes are sealingly mounted in a pressure vessel in such a manner that the membrane separates the vessel into two fluid regions wherein fluid flow between the two regions is accomplished by fluid permeating through the membrane. Under certain conditions, it may be highly desirable to provide support for the membrane when the membrane is employed in a separation apparatus or process. In one embodiment, the peripheral area of the membrane is affixed to a framing structure which supports the outer edge of the membrane. The membrane can be affixed to the framing structure by a clamping mechanism, adhesive, chemical bonding, or other techniques known in the art. The membrane affixed to the frame can then be sealingly engaged in the conventional manner in a vessel so that the membrane surface inside the framing support separates two otherwise non-communicating regions in the vessel. One skilled in the art will recognize that the structure which supports the membrane can be an internal part of the vessel or even the outer edge of the membrane.

The membranes of this invention are used to separate gases. Preferably the feed gas mixture contains at least one of the gases selected from the group consisting of hydrogen, helium, oxygen, nitrogen, carbon monoxide, carbon dioxide, hydrogen sulfide, ammonia, water vapor, and light hydrocarbons. Light hydrocarbons as used herein means unsaturated and saturated $C_{1-4}$ hydrocarbons.

The membrane divides the separation chamber into two regions, a high pressure side into which the feed gas mixture is introduced and a lower pressure side. One side of the membrane is contacted with a feed gas mixture under pressure, while a pressure differential is maintained across the membrane. In the embodiment wherein the membrane is in hollow fiber form, the feed gas mixture may be introduced on the outside or the inside of the hollow fiber. At least one gaseous component in the gas mixture selectively permeates through the membrane more rapidly than the other gaseous component(s) in the gas mixture. Gas which is enriched in the selectively permeating gaseous component(s) is thus obtained on the low pressure side of the membrane which is removed from the low pressure side of the membrane as permeate. Gas depleted in the selectively permeating gaseous component(s) is obtained on the high pressure side of the membrane which is removed from the high pressure side of the membrane as non-permeate.

Gas permeability is defined as:

$$P = \frac{\text{(amount of permeant)(membrane thickness)}}{\text{(area)(time)(driving force across the membrane)}}.$$

A standard permeability measurement unit is the Barrer (Ba), which is equal to:

$$\frac{(\text{centimeter (STP)})^3\ (\text{centimeter})}{(\text{centimeter})^2\ (\text{second})\ (\text{centimeter Hg})} \times 10^{-10},$$

abbreviated hereinafter as

$$\frac{cm^3(STP)\ cm}{cm^2\ s\ cm\ Hg} \times 10^{-10}.$$

The separation factor (selectivity) is defined as the ratio of the permeability of the faster permeating gas to the permeability of the slower permeating gas.

In the embodiment wherein oxygen is separated from nitrogen, the cross-linked membrane preferably has a separation factor for oxygen/nitrogen at 30 °C of at least 5.5, more preferably of at least 6.0, even more preferably of at least 6.5 and preferably a separation factor for oxygen/nitrogen at 50 °C of at least 4.5, more preferably of at least 5.5, even more preferably of at least 6.0. The permeability of oxygen at 30 °C is preferably at least 0.25 Barrers, more preferably at least 0.45 Barrers, even more preferably at least 0.70 Barrers.

In the embodiment wherein helium is separated from methane, the cross-linked membrane preferably has a separation factor for helium/methane greater than the uncross-linked membrane at 30 °C of at least 5 percent, more preferably of at least 10 percent, even more preferably of at least 25 percent. In the embodiment wherein helium is separated from ethane, the cross-linked membrane preferably has a separation factor for helium/ethane greater than the uncross-linked membrane at 30 °C of at least 15 percent, more preferably of at least 45 percent, even more preferably of at least 65 percent. In the embodiment wherein helium is separated from ethylene, the cross-linked membrane preferably has a separation factor for helium/ethylene greater than the uncross-linked membrane at 30 °C of at least 5 percent, more preferably of at least 25 percent, even more preferably of at least 45 percent.

In the embodiment wherein helium is separated from methane, the cross-linked membrane preferably has a separation factor for helium/methane at 30 °C of at least 90, more preferably of at least 110, even more preferably of at least 130 and preferably a separation factor for helium/methane at 50 °C of at least 75, more preferably of at least 95, even more preferably of at least 110. In the embodiment wherein helium is separated from ethane, the membrane preferably has a separation factor for helium/ethane at 30 °C of at least 125, more preferably of at least 300, even more preferably of at least 600. In the embodiment wherein helium is separated from ethylene, the cross-linked membrane preferably has a separation factor for helium/ethylene at 30 °C of at least 35, more preferably of at least 90, even more preferably of at least 120. The permeability of helium at 30 °C is at least 5 Barrers, more preferably at least 15 Barrers, even more preferably at least 45 Barrers.

The separation process is carried out at pressures and temperatures which do not deleteriously affect the membrane. The pressure and temperature used will vary depending upon the composition of the gas mixture being separated. Preferably, the pressure on the high pressure side of the membrane is between 10 psi and 2000 psi, more preferably between 50 psi and 1500 psi, even more preferably between 50 psi and 1000 psi. The pressure differential across the membrane is preferably between 5 psi and 500 psi, more preferably between 5 psi and 250 psi. The temperature of the feed gas mixture is preferably between 0 °C and 150 °C, more preferably between 5 °C and 100 °C, even more preferably between 5 °C and 80 °C.

Example 1 - Cross-linked Membranes From Bisphenol A And Tetrabromobisphenol A Polycarbonate Copolymers.

A series of film membranes were fabricated from two polycarbonate copolymers derived from tetrabromobisphenol A (TBBA) and bisphenol A (BA). The molar ratio of tetrabromobisphenol A to bisphenol A for the first polycarbonate copolymer was 9 to 1 (Copolymer 1); the molar ratio of tetrabromobisphenol A to bisphenol A for the second polycarbonate copolymer was 1 to 3 (Copolymer 2).

Three membranes were cast from the solutions listed in Table IA containing varying amounts of the two copolymers, the epoxy TACTIX 123® epoxy resin (a bisepoxide of bisphenol A) (® trademark of The Dow Chemical Company), and the initiator/catalyst bis(triphenylphosphoranylidene) ammonium chloride. A solution containing 0.2 grams TACTIX 123® epoxy resin in 0.8 grams methylene chloride and a solution containing 0.1 grams of bis(triphenyl-phosphoranylidene) ammonium chloride initiator/catalyst in 10 milliliters methylene chloride were prepared for use in the membrane casting solutions.

TABLE IA

| Membrane | Copolymer 1 (grams) | Copolymer 2 (grams) | Epoxy Solution (grams) | Catalyst Solution (ml.) | Methylene Chloride (ml.) |
|---|---|---|---|---|---|
| A1 | 0.74 | 0.263 | 0.7 | 1 | 9 |
| B1 | 0.74 | 0.255 | 0.2 | 1 | 9 |
| C1 | 0.745 | 0.269 | 0.447 | 1 | 9.2 |

Membranes from the solutions given in Table IA were cast onto glass plates and air dried overnight. The membranes were then transferred to aluminum foil coated with a silicone mold release and the membranes were heated at 90 °C for 0.5 hours, 130 °C for 0.5 hours, 170 °C for 0.5 hours, and 200 °C for 2 hours.

The amount of cross-linking obtained for a given membrane was determined from the percent gel. Cross-linking refers to reactions in which an insoluble polymer network is formed. The percent gel is the percentage of membrane comprising a polymer network of sufficient cross-link density such that the membrane is no longer soluble in a given solvent for the uncross-linked membrane such as methylene chloride. See "Cross-linking," Encyclopedia of Polymer Science, vol. 4, John Wiley and Sons, New York, New York, 1986, pp. 350-360. The percent gel was determined by measuring the initial weight of a sample of the membrane, placing the sample in methylene chloride until a stable measured dried weight was obtained, and calculating 100 X (the ratio of the final dried weight of the sample over the initial weight of the sample). The percent gel determined for each membrane was 89 percent for Membrane A1, 91.6 percent for Membrane B1, and 93.7 percent for Membrane C1.

The permeabilities of oxygen and helium through the membranes were determined at 30 °C by the constant-volume, variable-pressure method. The permeabilities of oxygen and helium and the separation factor calculated for oxygen/nitrogen are listed in Table IB.

TABLE IB

| Membrane | Permeability (Barrers) | | Separation Factor |
|---|---|---|---|
| | Oxygen | Helium | Oxygen/Nitrogen |
| A1 | - | - | - |
| B1 | 0.52 | 8.0 | 6.4 |
| C1 | 0.34 | 4.6 | 6.7 |

Example 2 - Cross-linked Membranes From Bisphenol A Polycarbonate And Tetrabromobisphenol A Polycarbonate Polymer Blends.

Film membranes were prepared from polymer blends of bisphenol A polycarbonate (BA-PC) and

tetrabromobisphenol A polycarbonate (TBBA-PC), using TACTIX® 123 epoxy resin (a bisepoxide of bisphenol A) (® trademark of The Dow Chemical Company), bis(triphenylphosphoranylidene) ammonium chloride as the initiator/catalyst, and methylene chloride as the solvent. Membranes were cast from the solutions listed in Table IIA onto glass plates and the methylene chloride was allowed to evaporate overnight. The membranes were removed from the glass plates and heated at 140°C for 0.5 hours and at 180°C for 1 hour.

TABLE IIA

| Membrane | BA-PC (grams) | TBBA-PC (grams) | Epoxy (grams) | Catalyst (grams) | Methylene Chloride (ml.) |
|---|---|---|---|---|---|
| A2 | 0.41 | 1.60 | 0.17 | 0.021 | 20 |
| B2 | 0.19 | 1.80 | 0.085 | 0.021 | 20 |
| C2 | 0.10 | 1.90 | 0.053 | 0.021 | 20 |

The percent gel of each membrane listed in Table IIB was determined by the technique described in Example 1. The percent weight uptake, sometimes referred to as the percent swelling, of each membrane in acetone was determined by placing a 0.1 gram sample of each membrane in 20 milliliters acetone at room temperature for 1 hour. The sample was removed from the acetone, blotted dry, and weighed. The sample was heated for 1 hour at 120°C, cooled, and weighed. The percent swelling was calculated as 100 X (the ratio of the dried sample weight over the wet sample weight - 1). The percent swelling of each membrane is reported in Table IIB.

TABLE IIB

| Membrane | Percent Gel | Percent Swelling |
|---|---|---|
| A2 | 98 | - |
| B2 | 87 | 22 |
| C2 | 39 | 48 |

The gas permeabilities of several gases, and the separation factors calculated therefrom, were determined at 30°C and at 50°C respectively by determining the molar ratio of permeating components using a mass spectrometer under constant-pressure, variable-volume conditions. The gas permeabilities of helium and oxygen and separation factors for oxygen/nitrogen and helium/methane are reported in Table IIC.

TABLE IIC

| Membrane | Permeability (Barrers) | | Separation Factor | |
|---|---|---|---|---|
| | Helium | Oxygen | $O_2/N_2$ | $He/CH_4$ |
| 30°C | | | | |
| A2 | 9.3 | 0.55 | 6.2 | 136 |
| B2 | 8.7 | 0.55 | 6.7 | 142 |
| C2 | 21.1 | - | - | 153 |
| 50°C | | | | |
| A2 | 15.6 | 0.94 | 4.3 | 132 |
| B2 | 14.4 | 0.87 | 5.4 | 137 |
| C2 | 20.9 | - | - | 109 |

Example 3 - Cross-linked Membranes From Tetrabromobisphenol A Polycarbonate.

A film membrane was prepared from a solution containing 1.41 grams tetrabromobisphenol A polycarbonate (TBBA-PC), 2.97 grams of a solution containing 1.00 gram bisphenol A polycarbonate, 2.1 grams of QUATREX® 6410 epoxy resin (a bisepoxide of tetrabromobisphenol A) (® trademark of The Dow Chemical Company), and 12.4 grams methylene chloride, 0.020 grams bis(triphenylphosphor-anylidene) ammonium chloride as the initiator/catalyst, and 9 milliliters methylene chloride as the solvent. A membrane was cast from the solution onto a glass plate and the methylene chloride was allowed to evaporate overnight. The membrane was removed from the glass plate and heated at 100 ° C for 0.5 hours, 140 ° C for 0.5 hours, and 180 ° C for 1 hour. The membrane swelled 37 percent in acetone as measured by the technique described in Example 2. The membrane had the following gas separation performance at 30 ° C: permeability of helium, 10.5 Barrers; permeability of oxygen, 0.63 Barrers; separation factor helium/methane, 145; separation factor oxygen/nitrogen, 6.7. The membrane had the following gas separation performance at 50 ° C: permeability of helium, 16.8 Barrers; permeability of oxygen, 0.95 Barrers; separation factor helium/methane, 134; separation factor oxygen/nitrogen, 6.2.

Example 4 - Cross-linked Membranes From Tetrabromobisphenol A Polyestercarbonate.

A film membrane was prepared from a solution containing 1.03 grams of a tetrabromobisphenol A polyestercarbonate copolymer (TBBA-PEC) with an ester/carbonate ratio of 1 to 4 with a tere-phthalate to iso-phthalate ratio of 4 to 1, 0.065 grams of TACTIX® 123 epoxy resin (a bisepoxide of bisphenol A) (® trademark of The Dow Chemical Company), 0.020 grams bis(triphenylphosphoranylidene) ammonium chloride as the initiator/catalyst, and 9 milliliters methylene chloride as the solvent. A membrane was cast from the solution onto a glass plate and the methylene chloride was allowed to evaporate overnight. The membrane was removed from the glass plate and heated at 100 ° C for 0.5 hours, 140 ° C for 0.5 hours, and 200 ° C for 1 hour. The membrane swelled 8.7 percent in acetone as determined by the technique described in Example 2. The membrane was evaluated for gas permeability by the technique described in Example 2. The membrane had the following gas separation performance at 30 ° C: permeability of helium, 15.3 Barrers; separation factor helium/methane, 141. The membrane had the following gas separation performance at 50 ° C: permeability of helium, 17.7 Barrers; permeability of oxygen, 1.5 Barrers; separation factor helium/methane, 122; separation factor oxygen/nitrogen, 6.7.

Example 5 - Cross-linked Membranes From Tetrabromobisphenol A Polycarbonate.

Various compositions were prepared from tetrabromobisphenol A polycarbonate (TBBA-PC), TACTIX® 742 epoxy resin (a polyglycidyl ether of tris(hydroxy phenyl) methane) (® trademark of The Dow Chemical Company), and bis(triphenylphosphoranylidene) ammonium chloride initiator/catalyst (PNP-Cl) as shown in Table VA. The polymer, epoxy resin, and initiator/catalyst were dissolved in methylene chloride as the solvent. The solutions were cast onto glass plates and the solvent allowed to slowly evaporate for 60 minutes at room temperature, followed by vacuum drying at 60 °C for 2 hours. The membranes were cross-linked by heating the membranes in a vacuum oven at the conditions shown in Table VA. The cross-linked membranes were clear and insoluble in methylene chloride. The glass transition temperatures (Tg) as measured by Differential Scanning Calorimetry (DSC) scanning at a rate of 30 °C/minute of the uncross-linked and cross-linked membranes are shown in Table VA. The gas permeabilities and separation factors as shown in Table VB were determined at 50 psia and 30 °C using the constant-volume, variable-pressure method.

TABLE VA

| Membrane | Epoxy/TBBA-PC wt. ratio | TBBA-PC wt. (grams) | Epoxy wt. (grams) | PNP-Cl wt. (grams) | Tg (°C) | Cross-link Temp. (°C) | Cross-link Time (hrs.) | Cross-link Tg (°C) |
|---|---|---|---|---|---|---|---|---|
| 5A | 2.4/97.6 | 2.522 | 0.062 | 0.0022 | 240 | 235 | 15 | 253 |
| 5B | 3.6/96.4 | 2.947 | 0.1096 | 0.0022 | 230 | 235 | 15 | 252 |
| 5C | 5.1/94.9 | 2.982 | 0.1594 | 0.0026 | 234 | 235 | 15 | 242 |
| 5D | 7.2/92.8 | 3.287 | 0.255 | 0.0030 | 224 | 235 | 15 | 224 |
| 5E | 9.0/91.0 | 2.244 | 0.222 | 0.0023 | 215 | 235 | 15 | 235 |
| 5F | 0/100 | 2.0 | - | - | 265 | - | - | - |

TABLE VB

| Membrane | Epoxy/TBBA-PC wt. ratio | Helium Permeability (Barrers) | Separation Factor | | |
|---|---|---|---|---|---|
| | | | $He/CH_4$ | $He/C_2H_4$ | $He/C_2H_6$ |
| 5A | 2.4/97.6 | 17.5 | 115 | 126 | 457 |
| 5B | 3.6/96.4 | 17.7 | 126 | 97 | 631 |
| 5C | 5.1/94.9 | - | - | - | - |
| 5D | 7.2/92.8 | 8.9 | 133 | 120 | 682 |
| 5E | 9.0/91.0 | 7.7 | 128 | 110 | 770 |
| 5F | 0/100 | 15.9 | 120 | 94 | 400 |

The cross-linked membranes generally possessed significantly greater separation factors for He/$CH_4$, He/$C_2H_4$, and He/$C_2H_6$ compared to the uncross-linked membrane.

Example 6 - Cross-linked Membrane From Bisphenol A Polycarbonate.

A solution was prepared by dissolving 3.945 grams of bisphenol A polycarbonate (BA-PC), 0.4997 grams of TACTIX® 742 epoxy resin (a polyglycidyl ether of tris(hydroxy phenyl) methane) (® trademark of The Dow Chemical Company), and 0.0038 grams bis(triphenylphosphoranylidene) ammonium chloride initiator/catalyst (PNP-Cl) in 0.75 grams of methylene chloride. The solution was cast onto a glass plate and the solvent allowed to slowly evaporate for 60 minutes at room temperature. The membrane was heated under vacuum for 8 hours at 60°C to remove residual solvent. The glass transition temperature (Tg) of the uncross-linked membrane as measured by Differential Scanning Calorimetry (DSC) scanning at a rate of 30°C/minute was 102°C. The membrane was cross-linked by heating the membrane in a vacuum oven at 125°C for 15 hours. The cross-linked membrane was clear and insoluble in methylene chloride, with a Tg measured by DSC scanning at a rate of 30°C/minute of 166°C. The gas permeabilities and separation factors for the uncross-linked and cross-linked membranes as shown in Table VI were determined at 50 psia and 30°C using the constant-volume, variable-pressure method.

TABLE VI

| Epoxy/BA-PC wt. ratio | Helium Permeability (Barrers) | Separation Factor | | |
|---|---|---|---|---|
| | | He/$CH_4$ | He/$C_2H_4$ | He/$C_2H_6$ |
| 0/100 | 13 | 34 | 24.4 | 104 |
| 11.2/88.8 | 11.6 | 40.9 | 35.7 | 126 |

The cross-linked membrane possessed significantly greater helium separation factors compared to the uncross-linked membrane.

Example 7 - Cross-linked Membrane From Tetrachlorobisphenol A Polycarbonate.

A solution was prepared by dissolving 2.16 grams of tetrachlorobisphenol A polycarbonate (TCBA-PC), 0.212 grams of TACTIX® 742 epoxy resin (a polyglycidyl ether of tris(hydroxy phenyl) methane) (® trademark of The Dow Chemical Company), and 0.0024 grams bis(triphenylphosphoranylidene) ammonium chloride initiator/catalyst (PNP-Cl) in 0.42 grams of methylene chloride. The solution was cast onto a glass plate and the solvent allowed to slowly evaporate for 60 minutes at room temperature. The membrane was heated under vacuum for 8 hours at 60°C to remove residual solvent. The glass transition temperature (Tg) of the uncross-linked membrane as measured by Differential Scanning Calorimetry (DSC) scanning at a rate of 30°C/minute was 223°C. The membrane was cross-linked by heating the membrane in a vacuum oven at 235°C for 24 hours. The cross-linked membrane was clear and insoluble in methylene chloride, with a Tg as measured by DSC scanning at a rate of 30°C/minute of 226°C. The gas permeabilities and separation factors for the uncross-linked and cross-linked membranes as shown in Table VII were determined at 50 psia and 30°C using the constant-volume, variable-pressure method.

TABLE VII

| Epoxy/TCBA-PC wt. ratio | Helium Permeability (Barrers) | Separation Factor | | |
|---|---|---|---|---|
| | | He/$CH_4$ | He/$C_2H_4$ | He/$C_2H_6$ |
| 0/100 | 20.2 | 105 | 63 | 315 |
| 8.9/91.1 | 25 | 117 | 90 | 373 |

Example 8 - Cross-linked Membranes From Hexafluorobisphenol A Polycarbonate.

Various compositions were prepared from hexafluorobisphenol A polycarbonate (HFBA-PC), TACTIX® 742 epoxy resin (a polyglycidyl ether of tris(hydroxy phenyl) methane) (® trademark of The Dow Chemical Company) and bis(triphenylphosphoranylidene) ammonium chloride initiator/catalyst (PNP-Cl) as shown in Table VIIIA. The polymer, epoxy resin, and initiator/catalyst were dissolved in methylene chloride as the solvent. The solutions were cast onto glass plates and the solvent allowed to slowly evaporate for 60 minutes at room temperature. The membranes were heated under vacuum for 8 hours at 60°C to remove residual solvent. The membranes were cross-linked by heating the membranes in a vacuum oven under the conditions given in Table VIIIA. The cross-linked membranes were clear and insoluble in methylene chloride. The glass transition temperatures (Tg) as measured by Differential Scanning Calorimetry (DSC) scanning at a rate of 30°C/minute of the uncross-linked and cross-linked membranes are reported in Table VIIIA. The gas permeabilities and separation factors for the uncross-linked and cross-linked membranes as shown in Table VIIIB were determined at 50 psia and 30°C using the constant-volume, variable-pressure method.

TABLE VIIIA

| Membrane | Epoxy/HFBA-PC wt. ratio | HFBA-PC wt. (grams) | Epoxy wt. (grams) | PNP-Cl wt. (grams) | Tg (°C) | Cross-link Temp. (°C) | Cross-link Time (hrs.) | Cross-link Tg (°C) |
|---|---|---|---|---|---|---|---|---|
| 8A | 8.0/92.0 | 2.073 | 0.180 | 0.0022 | - | 125 | 15 | 165 |
| 8B | 10.9/89.1 | 3.2952 | 0.404 | 0.0022 | 97 | 125 | 15 | 173 |
| 8C | 0/100 | 2.0 | - | - | 176 | - | - | - |

TABLE VIIIB

| Membrane | Epoxy/HFBA-PC wt. ratio | Helium Permeability (Barrers) | Separation Factor | | |
|---|---|---|---|---|---|
| | | | $He/CH_4$ | $He/C_2H_4$ | $He/C_2H_6$ |
| 8C | 0/100 | 56.5 | 37.8 | 51.4 | - |
| 8A | 8.0/92.0 | 39.9 | 88.8 | 96.9 | 255 |
| 8B | 10.9/89.1 | 25.2 | 97.0 | 112 | 341 |

The cross-linked membranes had significantly greater helium selectivities compared to the uncross-linked membrane.

Example 9 - Cross-linked Membrane From Hexafluorotetrabromobisphenol A Polycarbonate.

A solution was prepared using by dissolving 2.1006 grams of hexafluorotetrabromobisphenol A polycarbonate (HFTBBA-PC), 0.145 grams of TACTIX® 742 epoxy resin (a polyglycidyl ether of tris(hydroxy phenyl) methane) (® trademark of The Dow Chemical Company), and 0.0025 grams bis-(triphenylphosphoranylidene) ammonium chloride initiator/catalyst (PNP-Cl) in 0.42 grams of methylene chloride. The solution was cast onto a glass plate and the solvent allowed to slowly evaporate for 60 minutes at room temperature. The membrane was heated under vacuum for 8 hours at 60 ° C to remove residual solvent. The glass transition temperature (Tg) of the uncross-linked membrane as measured by Differential Scanning Calorimetry (DSC) scanning at a rate of 30 ° C/minute was 242 ° C. The membrane was cross-linked by heating the membrane in a vacuum oven at 235 ° C for 15 hours. The cross-linked membrane was clear and insoluble in methylene chloride, with a Tg as measured by DSC scanning at a rate of 30 ° C/minute of 242 ° C.

Example 10 - Cross-linked Membranes From Tetrabromobisphenol A Polycarbonate.

Various compositions were prepared from tetrabromobisphenol A polycarbonate (TBBA-PC), DEN® 438 epoxy resin (an epoxidized phenol/formaldehyde novolac) (® trademark of The Dow Chemical Company) and bis(triphenylphosphoranylidene) ammonium chloride initiator/catalyst (PNP-Cl) as shown in Table XA. The polymer, epoxy resin, and initiator/catalyst were dissolved in methylene chloride as the solvent. The solutions were cast onto glass plates and the solvent allowed to slowly evaporate for 60 minutes at room temperature. The membranes were heated under vacuum for 8 hours at 60 ° C to remove residual solvent. The membranes were cross-linked by heating the membranes in a vacuum oven under the conditions given in Table XA. The cross-linked membranes were clear and insoluble in methylene chloride. The glass transition temperatures (Tg) of the uncross-linked and cross-linked membranes are reported in Table XA as measured by Differential Scanning Calorimetry (DSC) scanning at a rate of 30 ° C/minute. The gas permeabilities and separation factors for the uncross-linked and cross-linked membranes as shown in Table XB were determined at 50 psia and 30 ° C using the constant-volume, variable-pressure method.

TABLE XA

| Membrane | Epoxy/TBBA-PC wt. ratio | TBBA-PC wt. (grams) | Epoxy wt. (grams) | PNP-Cl wt. (grams) | Tg (°C) | Cross-link Temp. (°C) | Cross-link Time (hrs.) | Cross-link Tg (°C) |
|---|---|---|---|---|---|---|---|---|
| 10A | 3.4/96.6 | 3.042 | 0.107 | 0.0028 | 238 | 235 | 16 | 239 |
| 10B | 8.8/91.2 | 3.030 | 0.292 | 0.0016 | 228 | 235 | 16 | 232 |
| 10C | 11.2/88.8 | 3.351 | 0.424 | 0.0020 | 177 | 160 | 16 | 195 |
| 10D | 0/100 | 2.0 | - | - | 265 | - | - | - |

TABLE XB

| Membrane | Epoxy/TBBA-PC wt. ratio | Helium Permeability (Barrers) | Separation Factor | | |
|---|---|---|---|---|---|
| | | | $He/CH_4$ | $He/C_2H_4$ | $He/C_2H_6$ |
| 10A | 3.4/96.6 | 15.4 | 128 | 105 | 420 |
| 10B | 8.8/91.2 | 6.9 | 148 | 113 | 460 |
| 10C | 11.2/88.8 | 9.8 | 118 | 125 | 2000 |
| 10D | 0/100 | 15.9 | 120 | 94 | 400 |

Example 11 - Percent Gel and Percent Swelling Of Cross-linked Bisphenol A Polycarbonate And Tetrabromobisphenol A Polycarbonate Blend Membranes.

Solutions were prepared containing bisphenol A polycarbonate (BA-PC), tetrabromobisphenol A polycarbonate (TBBA-PC), TACTIX® 123 epoxy resin (a bisepoxide of bisphenol A) (® trademark of the Dow Chemical Company), 0.01 grams bis(triphenylphosphoranylidene) ammonium chloride initiator/catalyst, and 6 milliliters methylene chloride as shown in Table XIA.

TABLE XIA

| Membrane | BA-PC (grams) | TBBA-PC (grams) | Epoxy (grams) |
|---|---|---|---|
| 11A | 0.404 | 0.6051 | 0.38 |
| 11B | 0.201 | 0.794 | 0.193 |
| 11C | 0.107 | 0.901 | 0.096 |
| 11D | 0.208 | 0.98 | 0.12 |
| 11E | 0.047 | 0.947 | 0.049 |

The percent gel and the percent swelling in acetone, reported in Table XIB, were determined by the techniques described in Examples 1 and 2. The data in Table XIB demonstrate the ability to adjust the values obtained for percent gel and percent swelling by varying the cross-link densities of the membranes.

TABLE XIB

| Membrane | Percent Gel | Percent Swelling |
|---|---|---|
| 11A | 99 | 13 |
| 11B | 97 | 14 |
| 11C | 90 | 17 |
| 11D | 68 | 57 |
| 11E | 10 | 50 |

Example 12 - Cross-linking Of Tetrabromobisphenol A Polycarbonate With TACTIX® 123 Epoxy Resin And Various Initiators/Catalysts.

Various casting solutions were prepared each containing tetrabromobisphenol A polycarbonate, 0.058 grams TACTIX® 123 epoxy resin (a bisepoxide of bisphenol A) (® trademark of the Dow Chemical Company), one of the various bis(triphenylphosphoranylidene) ammonium initiators/catalysts having an anion selected from the group chlorobenzene sulfonate (PNP-ClBS), methane sulfonate (PNP-MS), p-toluene sulfonate (PNP-pTSA), and trifluoroacetate (PNP-TFA), and 9 milliliters methylene chloride, as shown in Table XIIA.

TABLE XIIA

| Membrane | Polymer (grams) | Initiator | | Percent Gel |
|---|---|---|---|---|
| | | Type | (grams) | |
| 12A | 1.03 | PNP-CIBS | 0.010 | 2 |
| 12B | 1.02 | PNP-CIBS | 0.005 | 1.4 |
| 12C | 1.01 | PNP-MS | 0.010 | 15 |
| 12D | 1.01 | PNP-MS | 0.005 | 22 |
| 12E | 1.05 | PNP-pTSA | 0.0098 | 3 |
| 12F | 1.10 | PNP-pTSA | 0.0049 | 2 |
| 12G | 1.02 | PNP-TFA | 0.010 | 42 |
| 12H | 0.999 | PNP-TFA | 0.0051 | 22 |

The solutions were cast onto glass plates and heated for 0.5 hour at 100 ° C. The membranes were removed from the glass plates and placed on aluminum foil sprayed with mold release. The membranes were heated for 0.5 hour at 130 ° C and for 3 hours at 200 ° C. The percent gel is measured by the technique described in Example 1 and is listed in Table XIIA. The data of Table XIIA illustrate the use of different initiators/catalysts to achieve cross-linking at different temperatures.

Example 13 - Carbon Dioxide Permeability Behavior In A Cross-linked Tetrabromobisphenol A Polycarbonate Membrane.

The carbon dioxide permeability of Membrane 5D from Example 5 was measured at 30 ° C as a function of increasing upstream pressure using the constant-volume, variable-pressure method. The downstream side of the cross-linked membrane was maintained at vacuum conditions. The permeabilities for carbon dioxide in the cross-linked tetrabromobisphenol A polycarbonate (TBBA-PC) membrane compared to the uncross-linked membrane are shown in Table XIII and Figure 1.

The permeability for the cross-linked membrane exhibits a much lower dependence on pressure compared to the uncross-linked membrane.

TABLE XIII

| Uncross-linked TBBA-PC | | Cross-linked TBBA-PC | |
|---|---|---|---|
| Pressure (psia) | Permeability (Barrers) | Pressure (psia) | Permeability (Barrers) |
| 52.7 | 3.73 | 45 | 2.07 |
| 96.7 | 3.11 | 101 | 1.97 |
| 137.7 | 3.14 | 149 | 1.88 |
| - | - | 197 | 1.79 |
| - | - | 250 | 1.76 |
| - | - | 295 | 1.72 |
| - | - | 367 | 1.63 |
| 465 | 11.3 | 412 | 1.64 |

Example 14 - Carbon Dioxide/Methane Mixed Gas Permeability In A Cross-linked Tetrabromobisphenol A Polycarbonate Membrane.

Following measurement of the permeability of carbon dioxide in Example 13, the carbon dioxide pressure on the feed side of the membrane was at the final pressure of 412 psia. The valve to the carbon dioxide feed source was closed, thereby maintaining the feed side of the membrane at 412 psia carbon dioxide. The feed gas supply lines were evacuated and a new 50/50 mole percent $CO_2/CH_4$ feed source connected. The pressure was adjusted to equal the carbon dioxide pressure above the membrane and the valve connecting the feed side of the membrane was reopened. A purge on the feed side of the membrane was established to flush out the carbon dioxide present and maintain the feed gas at the desired composition. A purge rate of 0.01 percent of the faster permeating gas (carbon dioxide) was maintained throughout the course of the evaluation to prevent concentration polarization. The permeability measurements were made using the constant-volume, variable-pressure method at 30 °C. The permeate composition was determined using a Hewlett-Packard gas chromatograph. The permeability of each component i was calculated using the following equation:

$$P_i = \text{Total Permeability} \left( \frac{y_{ipermeate}}{y_{ifeed}} \right),$$

wherein $y_{ipermeate}$ is the fraction of component i in the permeate and $y_{ifeed}$ is the fraction of component i in the feed.

The mixed gas permeability measurements, along with the selectivity values, are shown in Table XIV and Figure 2.

TABLE XIV

| Membrane | $CO_2$ Pressure (psia) | $CO_2$ Permeability (Barrers) | Selectivity $CO_2/CH_4$ |
|---|---|---|---|
| Uncross-linked (plasticized) TBBA-PC | 300 | 11.6 | 24 |
| | | | |
| Cross-linked TBBA-PC | 197.7 | 1.74 | 34 |
| | 300 | 1.50 | 30 |
| | 400 | 1.35 | 27 |

## Claims

1. A cross-linked semi-permeable gas separation membrane comprising a thin discriminating layer substantially derived from a reaction product of an epoxy resin and a thermoformable, thermosettable aromatic polymer selected from the group consisting of polycarbonate, polyestercarbonate, polyester, and a combination thereof.

2. The membrane of Claim 1 wherein the aromatic polymer corresponds to the formula:

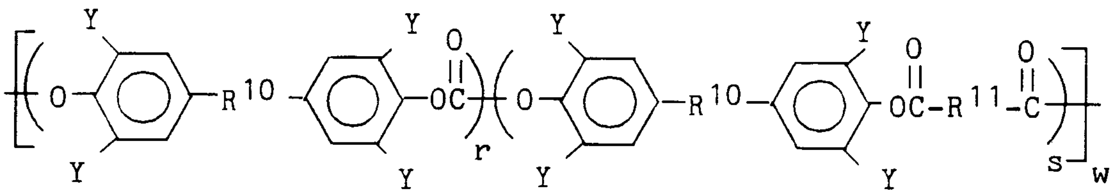

wherein

$R^{10}$ is independently in each occurrence selected from the group consisting of a direct bond, -CO-, $-CO_2-$, -S-, -SO-, $-SO_2-$, -SS-, -O-, a $C_{1-12}$ divalent hydrocarbon radical, an inertly substituted $C_{1-12}$divalent hydrocarbon radical, and a $C_{1-12}$ divalent halocarbon radical;

$R^{11}$ is independently in each occurrence selected from the group consisting of a $C_{1-18}$ divalent hydrocarbon radical, an inertly substituted $C_{1-18}$ divalent hydrocarbon radical, and a $C_{1-18}$ divalent halocarbon radical;

Y is independently in each occurrence selected from the group consisting of hydrogen, a halogen, a $C_{1-6}$ alkyl, a $C_{1-4}$ haloalkyl, and a $C_{1-4}$ alkoxy;

r is a positive real number between 0 and 1 inclusive;

s is a positive real number between 0 and 1 inclusive; and

w is a positive real number of at least 2.

**3.** The membrane of Claim 1 wherein the membrane is composite.

**4.** The membrane of Claim 1 wherein the membrane is asymmetric.

**5.** The membrane of Claim 1 wherein the membrane is a hollow fiber.

**6.** The membrane of Claim 1 wherein the membrane is a film.

**7.** The membrane of Claim 1 wherein the separation factor for helium/methane at about 30 ° C is at least about 5 percent greater than the uncross-linked membrane.

**8.** The membrane of Claim 1 wherein the membrane is substantially insoluble in methylene chloride.

**9.** A process of separating gases comprising:

A. contacting one side of a cross-linked semi-permeable gas separation membrane with a feed gas mixture under pressure, wherein the membrane divides a separation chamber into a high pressure side into which the feed gas mixture is fed and a low pressure side;

B. maintaining a pressure differential across the membrane under conditions such that at least one gaseous component in the feed gas mixture selectively permeates through the membrane from the high pressure side to the low pressure side of the membrane;

C. removing from the low pressure side of the membrane permeated gas which is enriched in the selectively permeating gaseous component(s); and

D. removing from the high pressure side of the membrane non-permeated gas which is depleted in the selectively permeating gaseous component(s),

wherein the membrane comprises a thin discriminating layer substantially derived from a reaction product of an epoxy resin and a thermoformable, thermosettable aromatic polymer selected from the group consisting of polycarbonate, polyestercarbonate, polyester, and a combination thereof.

**10.** The process of Claim 9 wherein the feed gas mixture contains at least one of the gases selected from the group consisting of hydrogen, helium, oxygen, nitrogen, carbon monoxide, carbon dioxide, water vapor, hydrogen sulfide, ammonia, and light hydrocarbons.

**11.** The process of Claim 9 wherein the membrane is a hollow fiber.

**12.** The process of Claim 9 wherein the membrane is a film.

**13.** The process of Claim 9 wherein the pressure of the feed gas mixture is between about 5 psig and about 2000 psig.

**14.** The process of Claim 9 wherein the temperature of the feed gas mixture is between about 0 °C and about 150 °C.

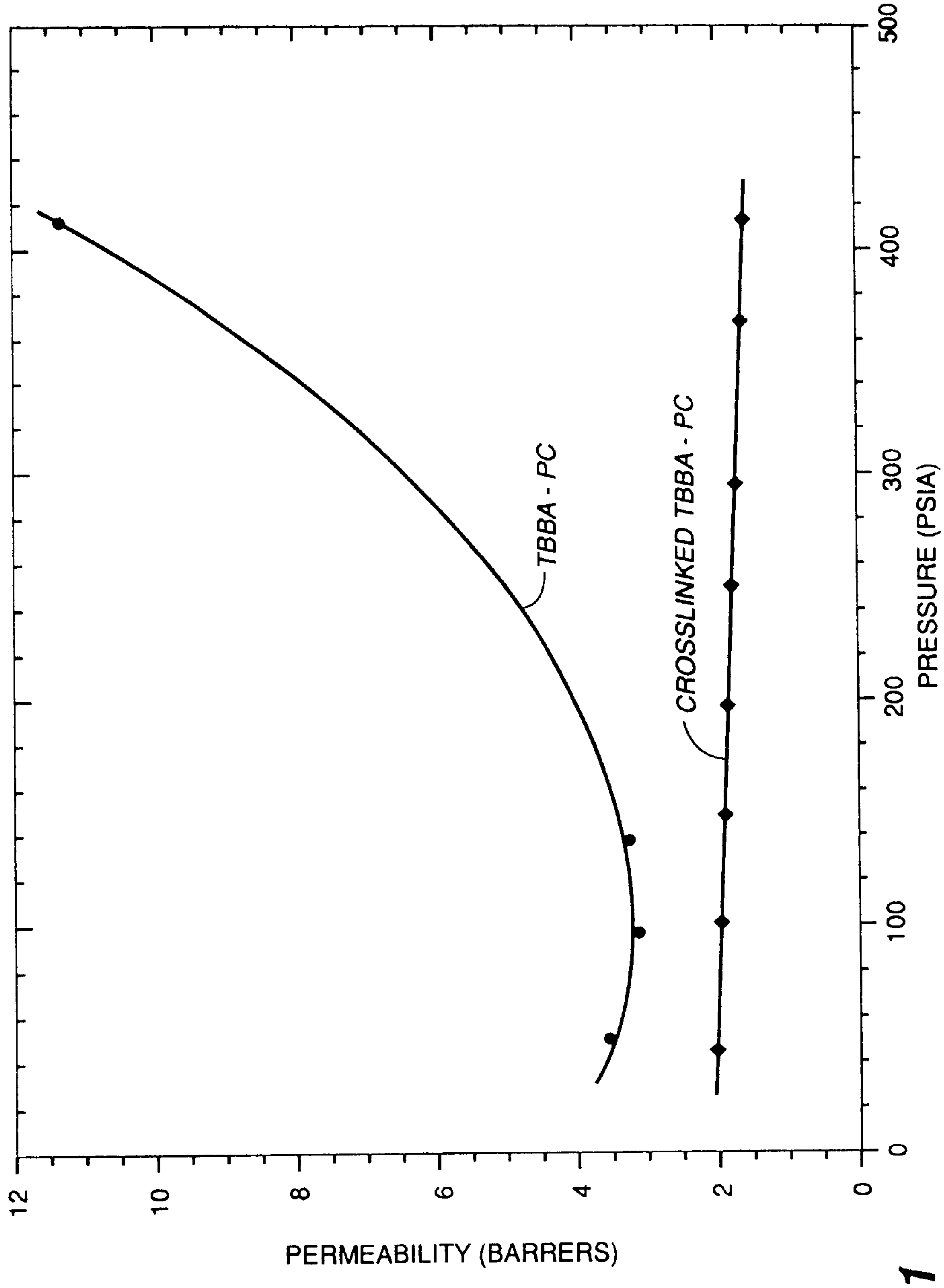
PERMEABILITY (BARRERS)
PRESSURE (PSIA)
TBBA - PC
CROSSLINKED TBBA - PC
0
2
4
6
8
10
12
0
100
200
300
400
500

FIG._1

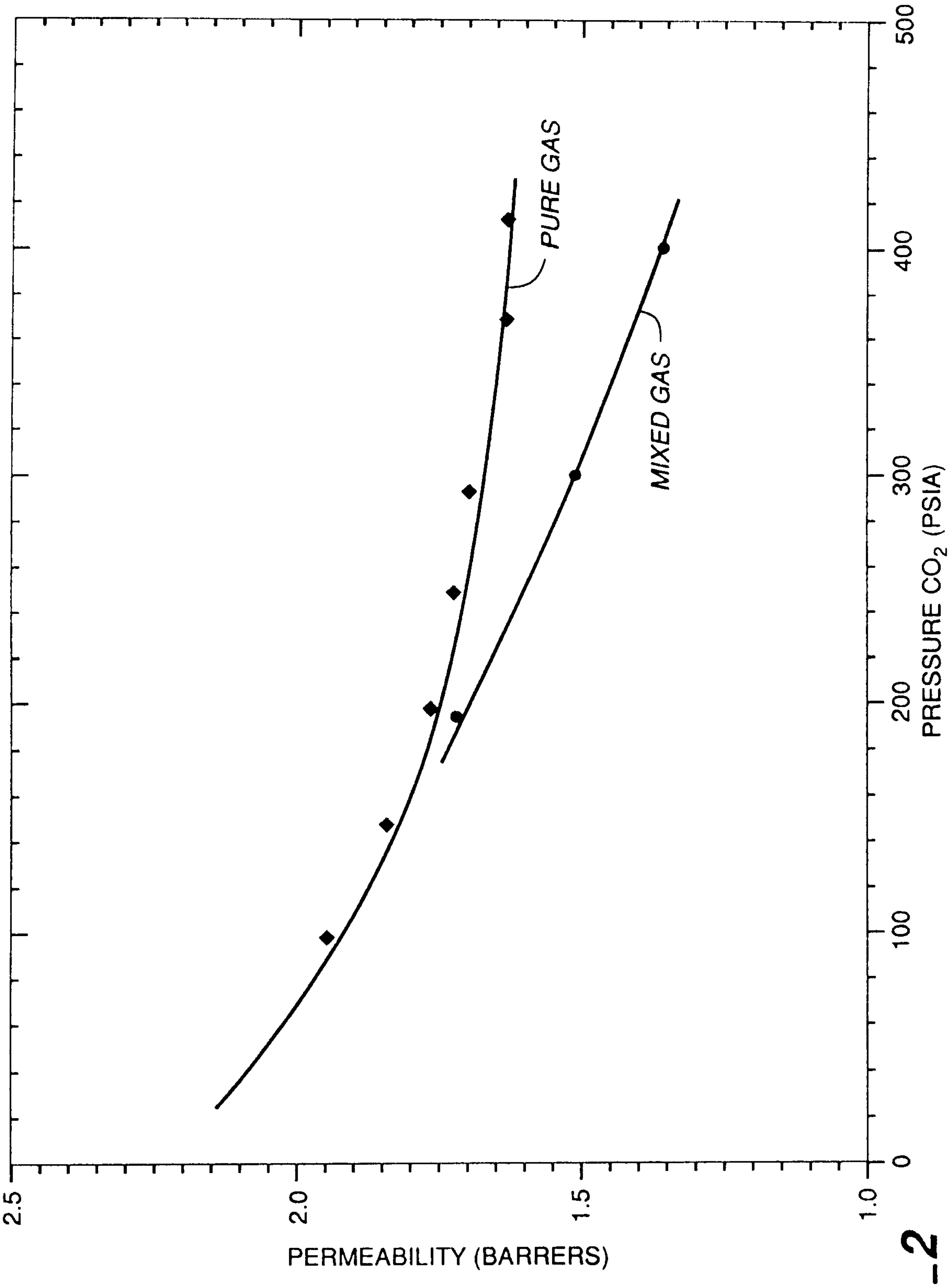
PURE GAS
MIXED GAS
0
100
200
300
400
500
PRESSURE $CO_2$ (PSIA)
2.5
2.0
1.5
1.0
PERMEABILITY (BARRERS)

FIG._2